# EUROPÄISCHE PATENTSCHRIFT

(11) **EP 3 091 679 B1**
(45) Veröffentlichungstag und Bekanntmachung des Hinweises auf die Patenterteilung: **27.02.2019**
(21) Anmeldenummer: 16168009.5
(22) Anmeldetag: 03.05.2016
(51) Int. Cl.: H04J 14/02

(54) **VERFAHREN ZUR EFFEKTIVEREN DATENÜBERTRAGUNG IN EINEM OPTISCHEN TELEKOMMUNIKATIONSNETZ IM WELLENLÄNGEN-MULTIPLEX-BETRIEB VON VERSCHIEDENEN OPTISCHEN WELLENLÄNGEN, WOBEI DAS OPTISCHE TELEKOMMUNIKATIONSNETZ ZWEI ÜBERGEORDNETE NETZKNOTEN UND EINE MEHRZAHL VON NETZELEMENTEN AUFWEIST, OPTISCHES TELEKOMMUNIKATIONSNETZ, COMPUTERPROGRAMM UND COMPUTERPROGRAMMPRODUKT**
METHOD FOR MORE EFFECTIVE DATA TRANSMISSION IN AN OPTICAL TELECOMMUNICATION NETWORK IN WAVELENGTH MULTIPLEX OPERATION OF OPTICAL WAVELENGTHS, WHEREIN THE OPTICAL TELECOMMUNICATION NETWORK HAS A PLURALITY OF NETWORK ELEMENTS AND TWO SUPERORDINATE NETWORK NODES, OPTICAL TELECOMMUNICATION NETWORK, COMPUTER PROGRAM AND COMPUTER PROGRAM PRODUCT
PROCÉDÉ DE TRANSMISSION EFFICACE DE DONNÉES DANS UN RÉSEAU DE TÉLÉCOMMUNICATION OPTIQUE EN MULTIPLEXAGE DE LONGUEURS D'ONDE D'UNE PLURALITÉ DE DIFFÉRENTES LONGUEURS D'ONDES OPTIQUES, LE RÉSEAU DE TÉLÉCOMMUNICATION OPTIQUE PRÉSENTANT DEUX N UDS DE RÉSEAU SUPÉRIEURS ET UNE PLURALITÉ D'ÉLÉMENTS DE RÉSEAU, RÉSEAU DE TÉLÉCOMMUNICATION OPTIQUE, PROGRAMME INFORMATIQUE ET PRODUIT DE PROGRAMME INFORMATIQUE

(30) Priorität: 05.05.2015 DE 102015208329
(43) Veröffentlichungstag der Anmeldung: 09.11.2016
(73) Patentinhaber: Deutsche Telekom AG, 53113 Bonn (DE)
(72) Erfinder: GUNKEL, Matthias, 64291 Darmstadt (DE); FRANZKE, Martin, 64285 Darmstadt (DE)
(74) Vertreter: Schwöbel, Thilo K.

(56) Entgegenhaltungen:
- EP-A2- 1 162 859
- GB-A- 2 350 001
- US-B1- 7 072 584

## Beschreibung

### Stand der Technik

Die Erfindung betrifft ein Verfahren zur effektiveren Datenübertragung in einem optischen Telekommunikationsnetz im Wellenlängen-Multiplex-Betrieb (WDM, wavelength division multiplex) von verschiedenen optischen Wellenlängen, wobei das optische Telekommunikationsnetz einen ersten übergeordneten Netzknoten, einen zweiten übergeordneten Netzknoten und ferner eine Mehrzahl von Netzelementen aufweist.

Die Erfindung betrifft ferner ein optisches Telekommunikationsnetz zur effektiveren Datenübertragung in einem optischen Telekommunikationsnetz im Wellenlängen-Multiplex-Betrieb von verschiedenen optischen Wellenlängen, wobei das optische Telekommunikationsnetz einen ersten übergeordneten Netzknoten, einen zweiten übergeordneten Netzknoten und ferner eine Mehrzahl von Netzelementen aufweist.

Ferner betrifft die Erfindung auch ein Computerprogramm mit Programmcodemitteln und ein Computerprogrammprodukt mit einem computerlesbaren Medium und einem auf dem computerlesbaren Medium gespeicherten Computerprogramm, die dazu geeignet sind, alle Schritte des erfindungsgemäßen Verfahrens auszuführen.

Verfahren zur Übertragung von Daten unter Nutzung von Lichtwellenleitern, d.h. unter Nutzung von optischen Telekommunikationsnetzen, sind allgemein bekannt, beispielsweise aus EP 1 162 859 A2. Beispielsweise gilt für viele breitbandige Telekommunikationsnetze, dass der überwiegende Teil der zu übertragenden Daten über optische Datenübertragungssysteme bzw. optische Telekommunikationsnetze, insbesondere unter Nutzung von Lichtwellenleitern, übertragen wird. Einsatz finden solche optischen Telekommunikationsnetze beispielsweise bei Aggregationsnetzen. Solche Aggregationsnetze, beispielsweise für Privatkundenverkehr, haben die Aufgabe, Verkehr von Regionalknoten zu Backbone-Knoten zu führen.

Es ist allgemein bekannt, in Aggregationsnetzen gemäß dem Stand der Technik auf der optischen Ebene/Schicht (Layer) filterlose Splitter und Koppler in einer offenen Horseshoe-Topologie (Hufeisen-Topologie) zu verwenden oder aber spektral fest eingestellte optische Add/Drop-Knoten (engl. FOADM, Fixed Optical Add/Drop Multiplexer) mit einer inhärenten Filterfunktionalität, ebenfalls in einer offenen Horseshoe-Topologie. Beide Varianten sind kostengünstig realisierbar, wobei die zweite Variante die Wiederverwendung einer Wellenlänge erlaubt, jedoch vergleichsweise wenig Flexibilität hinsichtlich sich ändernder Verkehrsanforderungen aufweist.

Eine Verbesserung gegenüber diesen beschriebenen Topologien stellt der Ringschluss dar, weil es dann auch im Fehlerfall des optischen Telekommunikationsnetzes prinzipiell immer einen Weg zum Ziel gibt. Dies hat jedoch zur Konsequenz, dass der Ring auf jeder Wellenlänge an wenigstens einer Stelle physikalisch unterbrochen werden muss, da es sonst in dem mit Verstärkern ausgerüsteten Ring zu einem "Laser"-Effekt kommen kann. Eine solche Unterbrechung kann mit stark dämpfenden Filtern in rekonfigurierbaren optischen Add/Drop-Knoten (engl. ROADM, Reconfigurable Optical Add/Drop Multiplexer) realisiert werden.

Es ist ferner beim Betrieb solcher Aggregationsnetze bekannt, dass das Backbone-Netz (bzw. Kernnetz) in einer A&B-Netzstruktur - bzw. mit einer gedoppelten Struktur - betrieben wird. Dies hat aus der Sicht der Internet Protokoll-Ebene bzw. Internet Protokoll-Schicht wesentliche Vorteile, denn beide Netze (bzw. Backbone-Netze) schützen sich gegenseitig: Hinter einem ersten übergeordneten Netzknoten (des optischen Telekommunikationsnetzes) befindet sich beispielsweise das A-(Backbone-)Netz und hinter einem zweiten übergeordneten Netzknoten (des optischen Telekommunikationsnetzes) befindet sich das (zum A-Backbone-Netz) symmetrisch aufgebaute B-(Backbone-)Netz.

Mit der vorliegenden Symmetrie im Backbone-Netz hat es sich als sinnvoll erwiesen, dass jeder beliebige (untergeordnete) Netzknoten des optischen Telekommunikationsnetzes sowohl mit dem ersten übergeordneten Netzknoten als auch mit dem zweiten übergeordneten Netzknoten verbunden ist.

Ein mit dem Ziel möglichst hoher Ausfallsicherheit geführter Betrieb eines solchen Aggregationsnetzes sieht vor, dass gleichzeitig neben dem operativ für die Datenübertragung genutzten Teil (zwischen einem Daten sendenden und einem die Daten empfangenden Knoten) der ringförmigen Glasfaserstrecke (Working-Pfad) für den Fehlerfall

(d.h. beispielsweise im Fall eines Faserbruchs auf dem operativ genutzten Teil des Glasfaserrings) der übrige Teil der ringförmigen Glasfaserstrecke (Backup-Pfad) zur Übertragung der Daten zwischen den beteiligten Knoten verwendet wird.

Ferner wird mit Blick auf eine möglichst hohe Ausfallsicherheit für den Fall der Verwendung eines gedoppelten Backbone-Netzes (d.h. im Vergleich zu den übergeordneten Netzknoten des betrachteten optischen Telekommunikationsnetzes (bzw. optischen Rings) weiter übergeordnete Netzknoten) bei bisher bekannten Systemen üblicherweise gefordert, dass der operativ für die Datenübertragung zwischen einem (untergeordneten) Netzelement (des betrachteten optischen Telekommunikationsnetzes) einerseits und dem ersten übergeordneten Netzknoten andererseits genutzte erste Teil des optischen Telekommunikationsnetzes (d.h. der ringförmigen Glasfaserstrecke) für die Datenübertragung zwischen dem gleichen (untergeordneten) Netzelement einerseits und dem zweiten übergeordneten Netzknoten andererseits nicht im operativen Normallfall (sondern lediglich in einem Fehlerfall), d.h. beispielsweise im Fall eines Faserbruchs, genutzt wird, sondern dass im Gegenteil zur Datenübertragung (von Nutzdaten des gleichen Netzelements) von bzw. zu dem zweiten übergeordneten Netzknoten im Normalfall ein zweiter Teil des optischen Telekommunikationsnetzes (d.h. der ringförmigen Glasfaserstrecke) für diese Datenübertragung genutzt wird, der sich vom ersten Teil des optischen Telekommunikationsnetzes unterscheidet bzw. von diesem disjunkt ist.

Ein solcher Betrieb eines optischen Telekommunikationsnetzes führt jedoch üblicherweise zu einer mangelhaften Ausnutzung der verfügbaren Bandbreite des Aggregationsnetzes, insbesondere sobald man optische Interfaces (Transponder, Transceiver) mit an die Streckenlänge angepasster Datenrate einsetzt, sog. flex-rate Transceiver.

### Offenbarung der Erfindung

Der Erfindung liegt die Aufgabe zugrunde, ein Verfahren und ein optisches Telekommunikationsnetz sowie ein Computerprogramm und ein Computerprogrammprodukt zur Verfügung zu stellen, welches die Bandbreitenressourcen möglichst optimal ausnutzt und damit eine bei ansonsten gleichen Bedingungen - insbesondere hinsichtlich des Investitionsbedarfs für die Komponenten des optischen Telekommunikationsnetzes - höhere Leistungsfähigkeit (im Sinn einer insgesamt höheren, nutzbaren Datentransportkapazität) bei gleichzeitig nicht oder nur unwesentlich reduzierter Ausfallsicherheit gegenüber Fehlerfällen wie beispielsweise Faserbrüchen oder dergleichen aufweist.

Diese Aufgabe wird erfindungsgemäß gelöst durch ein Verfahren zur effektiveren Datenübertragung in einem optischen Telekommunikationsnetz im Wellenlängen-Multiplex-Betrieb (WDM, wavelength division multiplex) von verschiedenen optischen Wellenlängen, wobei das optische Telekommunikationsnetz einen ersten übergeordneten Netzknoten, einen zweiten übergeordneten Netzknoten und ferner eine Mehrzahl von Netzelementen aufweist, wobei die Mehrzahl von Netzelementen wenigstens ein erstes Netzelement und ein zweites Netzelement aufweisen, wobei das Telekommunikationsnetz eine optische Übertragungsstrecke aufweist, wobei die optische Übertragungsstrecke
-- den ersten übergeordneten Netzknoten und das erste Netzelement sowie
-- das erste Netzelement und das zweite Netzelement sowie ferner
-- das zweite Netzelement und den zweiten übergeordneten Netzknoten direkt oder indirekt miteinander verbindet, wobei die optische Übertragungsstrecke weiterhin auch den ersten übergeordneten Netzknoten und den zweiten übergeordneten Netzknoten miteinander verbindet, so dass die optische Übertragungsstrecke topologisch ringförmig geschlossen ist, wobei die ringförmig geschlossene optische Übertragungsstrecke das erste Netzelement entweder über einen ersten Signalpfad oder über einen zweiten Signalpfad mit dem ersten übergeordneten Netzknoten zumindest indirekt verbindet und wobei die ringförmig geschlossene optische Übertragungsstrecke das erste Netzelement entweder über einen weiteren ersten Signalpfad oder über einen weiteren zweiten Signalpfad mit dem zweiten übergeordneten Netzknoten zumindest indirekt verbindet, wobei sich der erste Signalpfad und der weitere erste Signalpfad zumindest in einem ersten Teilbereich der optischen Übertragungsstrecke überlappen, wobei sich der zweite Signalpfad und der weitere zweite Signalpfad zumindest in einem zweiten Teilbereich der optischen Übertragungsstrecke überlappen, wobei sowohl der erste und zweite Signalpfad als auch der weitere erste und weitere zweite Signalpfad disjunkt zueinander sind und sich jeweils paarweise, d.h. der erste Signalpfad und der zweite Signalpfad sowie der weitere erste Signalpfad und der weitere zweite Signalpfad, zur der optischen Übertragungsstrecke ergänzen, wobei in einem Normalbetriebsmodus des optischen Telekommunikationsnetzes zur Datenübertragung
-- zwischen dem ersten Netzelement und dem ersten übergeordneten Netzknoten der Datentransport auf dem ersten Signalpfad der optischen Übertragungsstrecke und
-- zwischen dem ersten Netzelement und dem zweiten übergeordneten Netzknoten der Datentransport auf dem weiteren ersten Signalpfad der optischen Übertragungsstrecke verwendet wird (Dual Homing).

Es ist dadurch gemäß der vorliegenden Erfindung in vorteilhafter Weise möglich, dass die im Normalfall (d.h. ohne eine fehlerhafte Beeinträchtigung des optischen Telekommunikationsnetzes) verfügbare Datenübertragungsbandbreite verbessert werden kann, insbesondere gegenüber einem Betrieb des optischen Telekommunikationsnetzes, bei dem gefordert wird, dass der operativ für die Datenübertragung zwischen einem (untergeordneten) Netzelement des betrachteten optischen Telekommunikationsnetzes einerseits und dem ersten übergeordneten Netzknoten andererseits genutzte erste Teil des optischen Telekommunikationsnetzes für die Datenübertragung zwischen dem gleichen (untergeordneten) Netzelement einerseits und dem zweiten übergeordneten Netzknoten andererseits im operativen Normallfall nicht genutzt wird, sondern dass im Normalfall für diese Datenübertragung (von bzw. zu dem zweiten übergeordneten Netzknoten) ein zweiter Teil des optischen Telekommunikationsnetzes genutzt wird, der sich vom ersten Teil des optischen Telekommunikationsnetzes unterscheidet bzw. von diesem disjunkt und üblicherweise länger ist und daher eine geringe Performance erzielt.

Erfindungsgemäß ist es vorgesehen, dass das optische Telekommunikationsnetz eine ringförmig geschlossene optische Übertragungsstrecke (d.h. in Form eines optischen Rings bzw. eines Rings einer Glasfaserstrecke bzw. Glasfaserleitung) aufweist, wobei das optische Telekommunikationsnetz einen ersten übergeordneten Netzknoten, einen zweiten übergeordneten Netzknoten und ferner eine Mehrzahl von Netzelementen aufweist, wobei die Mehrzahl von Netzelementen wenigstens ein erstes Netzelement und ein zweites Netzelement aufweisen. Durch den Ringschluss ist es erfindungsgemäß in vorteilhafter Weise möglich, dass es auch im Fehlerfall (d.h. beispielsweise bei einer an einer Stelle unterbrochenen Glasfaserleitung) immer einen (nicht fehlerbehafteten) Weg zur Durchführung der Datenübertragung zwischen der jeweiligen Quelle der Daten und dem jeweiligen Ziel der Daten gibt. Erfindungsgemäß ist es vorgesehen, dass der optische Ring auf jeder Wellenlänge an einer Stelle physikalisch unterbrochen wird, da es sonst in dem mit Verstärkern ausgerüsteten Ring zu einem "Laser"-Effekt kommt. Diese Unterbrechung kann beispielsweise mit stark dämpfenden Filtern in rekonfigurierbaren optischen Add/Drop-Knoten (engl. ROADM, Reconfigurable Optical Add/Drop Multiplexer) realisiert werden.

Typischerweise weist das optische Telekommunikationsnetz bzw. der Glasfaserring eine Vielzahl von Netzelementen auf, welche auch als sogenannte R1-Router bzw. als (regionale) Aggregationsknoten bezeichnet werden und für ein bestimmte Region die Anbindung der in der (Netzwerk-)Hierarchie darunter angeordneten Netzelemente an das Backbone-Netz gewährleisten. Ferner weist das optische Telekommunikationsnetz den ersten übergeordneten Netzknoten und den zweiten übergeordneten Netzknoten auf. Diese Netzknoten werden auch als R2-Router bzw. als Backbone-Router bezeichnet. Aufgrund dessen, dass der erste und zweite übergeordnete Netzknoten Teil des optischen Telekommunikationsnetzes bzw. Teil der optischen Übertragungsstrecke ist, ist es erfindungsgemäß in vorteilhafter Weise möglich, dass das Backbone-Netz (bzw. Kernnetz) in einer A&B-Netzstruktur - bzw. mit einer gedoppelten Struktur - betrieben wird. Hierdurch ist es aus Sicht der Internet Protokoll-Ebene bzw. Internet Protokoll-Schicht in vorteilhafter Weise möglich, dass sich beide Netze (bzw. Backbone-Netze) gegenseitig schützen: Hinter einem ersten übergeordneten Netzknoten (des optischen Telekommunikationsnetzes bzw. der optischen Übertragungsstrecke) befindet sich beispielsweise das A-(Backbone-)Netz und hinter einem zweiten übergeordneten Netzknoten (des optischen Telekommunikationsnetzes bzw. der optischen Übertragungsstrecke) befindet sich das (zum A-Backbone-Netz) symmetrisch aufgebaute B-(Backbone-)Netz.

Erfindungsgemäß können Aggregationsringe auf der optischen Schicht (bzw. dem optischen Layer) beispielsweise bzw. vorzugsweise nach einem der folgenden Prinzipien aufgebaut werden:
-- Gemischte Knotentechnik mit Splittern und Kopplern an den Aggregationsknoten (R1-Router bzw. den Netzelementen der optischen Übertragungsstrecke), flexibel rekonfigurierbare optische Add/Drop-Knoten (engl. ROADM) an einem oder an beiden Backbone-Routern (R2-Router bzw. den übergeordneten Netzknoten der optischen Übertragungsstrecke) sowie schnellen optischen Schaltern (bevorzugt jeweils pro Transponder) in allen Empfangszweigen der optischen Knoten in einer geschlossenen Ringarchitektur;
-- Einsatz von ROADM an allen Knoten im Ring - also an allen Aggregationsknoten (R1-Router bzw. den Netzelementen der optischen Übertragungsstrecke) und an den Backbone-Routern (R2-Router bzw. den übergeordneten Netzknoten der optischen Übertragungsstrecke) - mit schnellen optischen Schaltern (bevorzugt jeweils pro Transponder) in allen Empfangszweigen der optischen Knoten in einer geschlossenen Ringarchitektur.

Hierdurch ist es erfindungsgemäß in vorteilhafter Weise möglich, dass ein schichtenübergreifender (Layer-übergreifender) Schutz auf sowohl der optischen Ebene (bzw. optischen Schicht) als auch auf der Internet Protokoll-Ebene (bzw. Internet Protokoll-Schicht) hohe Kosteneinsparungen erlaubt.

Ebenso wird hierdurch in vorteilhafter Weise möglich, dass die gedoppelte Anbindung der Aggregationsknoten (d.h. jedes einzelnen der (Mehrzahl bzw. Vielzahl von) R1-Router) an zwei R2-Router (d.h. das "dual homing"-Prinzip) nicht angetastet wird. Verkehrsbeziehungen bestehen in einem solchen Fall in aller Regel nur zwischen dem jeweils betrachteten Aggregationsknoten (bzw. R1-Router) einerseits und dem ersten übergeordneten Netzknoten (erster R2-Router) bzw. dem zweiten übergeordneten Netzknoten (zweiter R2-Router) andererseits. Zwischen den Aggregationsknoten (R1-Knoten bzw. R1-Routern) selbst besteht insbesondere keine direkte Beziehung. Die Fasertopologie der optischen Übertragungsstrecke selbst ist bidirektional ausgeführt.

Beispielsweise liegt die Kapazität bei bekannten und heute kommerziell verfügbaren, festen optischen Netzwerkknoten bei maximal 100Gbit/s. Bisher ist es bei solchen optischen Netzen vorgesehen, dass eine disjunkte Führung von Working-Pfad und Backup-Pfad auf dem optischen Layer realisiert wird: Für eine ausfallsichere Verbindung zwischen einem R1-Knoten mit einem der beiden R2-Backbone-Knoten wird jede einzelne 100G-Verbindung optisch gedoppelt und belegt auf ihrer Wellenlänge den Ring vollständig. Hierzu wird ein Transponderpaar benötigt, d.h. ein erster Transponder am betrachteten R1-Router und ein anderer Transponder am ersten R2-Router bzw. am zweiten R2-Router. Üblicherweise wird die kürzere Verbindung (zwischen dem betrachteten R1-Router und entweder dem ersten R2-Router oder aber dem zweiten R2-Router) als Working-Pfad ausgewertet. Der Backup-Pfad ist im Normalbetrieb in Betrieb heißgeschaltet (d.h. er liegt schon am Empfänger an), wird jedoch im fehlerfreien Fall nicht ausgewertet. Hierdurch wird garantiert, dass im Fehlerfall das Backup-Signal nicht langwierig über die Verstärkerkette eingepegelt werden muss, sondern unmittelbar vorhanden ist und mit einem Schalter schnell ausgewählt werden kann. Es spielt insbesondere in dieser Beziehung keine Rolle, ob vom Router abgesetzte Transponder zum Einsatz kommen oder neuartigere, sogenannte "colorierte Interface" direkt im Router zum Einsatz kommen. Bei bisherigen Lösungen wird bei Verwendung einer A&B-Backbone-Netzstruktur (d.h. mit einer gedoppelten Struktur und damit dem Vorhandensein des ersten übergeordneten Netzknotens und des zweiten übergeordneten Netzknotens) ein bestimmtes Netzelement (bzw. R1-Router) zu den beiden übergeordneten Netzknoten jeweils disjunkt im Working-Pfad (d.h. im Normalbetrieb, bei Abwesenheit von Faserstörungen der Glasfaserverbindung) betrieben. Aufgrund der Forderung nach disjunkter Wegeführung für den normalen Betriebsfall (d.h. die jeweiligen Working-Pfade der Anbindung an den ersten bzw. zweiten übergeordneten Netzknoten sind disjunkt) ist es unvermeidlich, dass jedes betrachtete Netzelement (bzw. R1-Knoten) zu einem der beiden übergeordneten Netzknoten über eine längere Wegführung der optischen Übertragungsstrecke angebunden ist. Dies hat den Vorteil, dass im Fall einer Fehlersituation nur die vom Ausfall betroffene Transponderpaar-Verbindung mit optischen Ersatzschalte-Mechanismen wieder hergestellt werden muss. Im Fall von optischer Wiederherstellung dauert diese Heilung vergleichsweise lange, weil WSS-Bauelemente (Wavelength Selective Switch -Bauelemente) eingepegelt werden müssen. Die andere, den Leitungsfehler überlebende Verbindung steht dauerhaft zur Verfügung und kann unmittelbar für Resilience-Mechanismen auf IP-Ebene genutzt werden. Bei einer solchen herkömmlichen Realisierung stellt aus Sicht des Internet Protokoll-Netzes (mit Blick auf Traffic Engineering aus Sicht der IP-Clients bzw. der IP-Router) die identische Kapazitätsaufteilung mehrerer Verbindungen einen Vorteil für die Verkehrslenkung dar, weil die von einem R1-Router abfließenden Verkehre im Upstream (d.h. in Richtung von einem R1-Router zum R2-Router bzw. zu den R2-Routern) durch Load-Balancing-Mechanismen symmetrisch auf die beiden Verbindungen bzw. Backbone-Netze (A-Netz bzw. B-Netz) aufgeteilt werden und im Downstream an einem fernen Router ebenfalls der Verkehr symmetrisch verteilt wird. Die Internet Protokoll-Schicht (Internet Protokoll-Layer) kann damit gemäß der herkömmlichen Architektur völlig unabhängig von der topologischen Wegeführung im optischen Transportnetz betrieben werden. Beide IP-Links können mit der gleichen IP-Metrik betrieben werden; durch Methoden des Traffic Engineerings (z.B. ECMP, Equal Cost Multi Path) wird die Verkehrslast gleichmäßig auf beide Schnittstellen verteilt, wobei die überlebende Verbindung beispielsweise im Fehlerfall die gesamte Last übernimmt, so dass sie folglich auch nur zu maximal 50% in fehlerfreien Fall belastet werden darf. Eine Heilung des Fehlermusters findet somit ausschließlich auf dem IP-Layer statt; der optische Layer ist nicht in die Wiederherstellung eingebunden.

Ein Nachteil einer solchen herkömmlichen Anordnung ist es, dass die beiden Lichtpfade oftmals deutlich unterschiedliche Streckenlängen im Ring zurücklegen müssen. Dies bedeutet, dass oftmals eine der beiden Verbindungen weit unterhalb ihrer physikalischen Reichweitengrenze betrieben wird, während die andere Verbindung schon knapp unterhalb der spezifizierten Maximalreichweite arbeitet. Dies stellt bei nicht reichweiteadaptiven Schnittstellen (zwischen den Netzelementen bzw. Netzknoten) den Normalfall dar, so dass ein hohes Maß an Leistungsreserve im Fall einer lediglich kurzen Verbindung zwischen Netzelementen bzw. Netzknoten verloren geht bzw. bei der herkömmlichen Anordnung ungenutzt bleibt. Ferner ist es bei einer solchen herkömmlichen Anordnung so, dass bei Ringlängen, die oberhalb der Maximalreichweite liegen, im Fehlerfall überhaupt keine Verbindung mehr hergestellt werden kann, es sei denn, es werden kostspielige Zwischenregeneratoren verwendet, was insbesondere auf die gemäß herkömmlicher Anordnung verwendeten starren Transponder zurückzuführen ist, die in ihrer Kapazität nicht verändert werden können und die immer die ihrer Nennkapazität entsprechende Verkehrslast befördern (die bei großen Entfernungen nicht gedrosselt werden kann).

Auch die Verwendung von Transpondern mit flexibler Kapazität führt bei einem solchen bekannten System bzw. einer solchen bekannten Anordnung unter Beibehaltung der Disjunktheitsforderung (für den Working-Pfad bzw. den Backup-Pfad) nicht zu einer Erhöhung der Datenübertragungskapazität bzw. der möglichen Bandbreite. Dies deshalb, weil im Normalfall beispielsweise bei vorgegebener maximalen Auslastung im regulären Betrieb (d.h. nach vorgeschriebenen Belastungsregeln) die Schnittstellen lediglich mit bis 80% der (nominal) verfügbaren Kapazität betrieben werden dürfen. Der Hintergrund hierfür sind kurzzeitige, (insbesondere aufgrund eines vorgegebenen Messintervalls von beispielsweise 100 Sekunden oder 200 Sekunden oder 300 Sekunden oder 600 Sekunden) nicht exakt messbare Verkehrsspitzen, die durch die verbleibenden 20% Reserve abgefangen werden. Weiterhin müssen beide Verbindungen symmetrisch betrieben werden. Aufgrund der nach bisherigen Betriebskonzepten sich gegenseitig schützenden Working-Pfade zweier Verbindungen von einem R1-Router zum ersten bzw. zweiten übergeordneten Netzknoten und deren disjunkter Führung, ergibt sich zwar der Vorteil der Überlebensgarantie einer der beiden Verbindungen (weshalb sie für IP-Resilience-Maßnahmen jederzeit verwendet werden), es wird jedoch nicht die mögliche Übertragungsbandbreite realisiert. Dies gilt auch für den Fall der Verwendung von Datenraten-flexiblen Schnittstellen: Beispielsweise gilt bei einer im Normalfall vorgegebenen maximalen Auslastung von 80% bei einer symmetrischen Anbindung (beispielsweise eines R1-Routers) von nominal 300Gbit/s eine Kapazität im Normalfall von 480Gbit/s (300Gbit/s * 80% * 2) und im Fehlerfall von 600Gbit/s (300Gbit/s * 100% *2), d.h. eine nutzbare Gesamtkapazität von 480Gbit/s, da der Normalfall und der Fehlerfall immer zusammen betrachtet werden müssen. Der bisher bekannte Betrieb gemäß der herkömmlichen Anordnung führt daher auch bei Verwendung von flexiblen Schnittstellen nicht zu einer insgesamt höheren Auslastung des Netzes.

Erfindungsgemäß ist es vorgesehen, dass die ringförmig geschlossene optische Übertragungsstrecke
-- das erste Netzelement (d.h. ein beliebiger betrachteter R1-Router der optischen Übertragungsstrecke) entweder über einen ersten Signalpfad oder über einen zweiten Signalpfad mit dem ersten übergeordneten Netzknoten (zumindest indirekt) verbindet und
-- das (gleiche) erste Netzelement ferner entweder über einen weiteren ersten Signalpfad oder über einen weiteren zweiten Signalpfad mit dem zweiten übergeordneten Netzknoten (zumindest indirekt) verbindet,
wobei sich der erste Signalpfad und der weitere erste Signalpfad zumindest in einem ersten Teilbereich der optischen Übertragungsstrecke überlappen, wobei sich der zweite Signalpfad und der weitere zweite Signalpfad zumindest in einem zweiten Teilbereich der optischen Übertragungsstrecke überlappen, wobei sowohl der erste und zweite Signalpfad als auch der weitere erste und weitere zweite Signalpfad disjunkt zueinander sind (und sich jeweils paarweise zur der optischen Übertragungsstrecke ergänzen), wobei im Normalbetriebsmodus zur Datenübertragung zwischen dem ersten Netzelement und sowohl dem ersten als auch dem zweiten übergeordneten Netzknoten der Datentransport parallel (d.h. zumindest teilweise über dieselbe Wegstrecke der optischen Übertragungsstrecke, d.h. nicht disjunkt) über den ersten Teilbereich der optischen Übertragungsstrecke geführt wird. Somit ist es erfindungsgemäß vorgesehen, dass im Normalbetriebsmodus zur Datenübertragung
-- zwischen dem ersten Netzelement und dem ersten übergeordneten Netzknoten ein Datentransport auf dem ersten Signalpfad der optischen Übertragungsstrecke und
-- zwischen dem ersten Netzelement und dem zweiten übergeordneten Netzknoten ein Datentransport auf dem weiteren ersten Signalpfad der optischen Übertragungsstrecke stattfindet.

Es ist hierdurch vorteilhaft möglich, im Normalfall eine höhere Übertragungsbandbreite für die Übertragung von Daten zwischen dem ersten Netzelement und sowohl dem ersten übergeordneten Netzknoten als auch dem zweiten übergeordneten Netzknoten zu realisieren (weil für beide Fälle zumindest teilweise die gleiche Wegstrecke entlang der optischen Übertragungsstrecke verwendbar ist und somit auch der jeweils kürzere Weg zwischen Quellknoten und Zielknoten verwendbar ist), wobei die realisierbare Übertragungsbandbreite abhängig ist vom Abstand zwischen Quellknoten und Zielknoten entlang der optischen Übertragungsstrecke, d.h. geringere Abstände führen zur Möglichkeit einer höheren Datenübertragungsbandbreite als längere Abstände.

Durch die Parallelführung im optischen Ring der Verbindungen zur Bereitstellung von Internet Protokoll-Links (bzw. Internet Protokoll-Verbindungen) zwischen dem ersten übergeordneten Netzknoten bzw. dem zweiten übergeordneten Netzknoten einerseits und dem betrachteten (beispielsweise ersten) Netzelement andererseits werden diese Verbindungen somit erfindungsgemäß einem gemeinsamen Risiko unterworfen, was durch die herkömmliche Betriebsweise gerade vermieden werden sollte. Erfindungsgemäß bietet diese parallele Betriebsführung aber auch die Möglichkeit, für beide Verbindungen (d.h. sowohl zwischen dem ersten übergeordneten Netzknoten und dem betrachteten Netzelement als auch zwischen dem zweiten übergeordneten Netzknoten und dem betrachteten Netzelement) gleiche Datenübertragungskapazitäten anzubieten bzw. zu nutzen und zusammen mit bestehenden Auslastungsregeln (vorgegebene Obergrenzen im Normalfall bzw. Nichtfehlerfall) ein höhere Ausnutzung von Schnittstellen bzw. Interfaces zu ermöglichen.

Erfindungsgemäß ist es bevorzugt vorgesehen, dass in einem Fehlerfallbetriebsmodus des optischen Telekommunikationsnetzes, in welchem die optische Übertragungsstrecke in ihrem ersten Teilbereich - des Überlappbereichs zwischen dem ersten Signalpfad und dem weiteren ersten Signalpfad - unterbrochen ist, zur Datenübertragung
-- zwischen dem ersten Netzelement und dem ersten übergeordneten Netzknoten der

Datentransport auf dem zweiten Signalpfad der optischen Übertragungsstrecke und
-- zwischen dem ersten Netzelement und dem zweiten übergeordneten Netzknoten der Datentransport auf dem weiteren zweiten Signalpfad der optischen Übertragungsstrecke verwendet wird,
wobei vom Normalbetriebsmodus zum Fehlerfallbetriebsmodus durch ein Umschalten des Datentransports - vom ersten und weiteren ersten Signalpfad zum zweiten und weiteren zweiten Signalpfad - umkonfiguriert wird. Somit ist es auch für den Fehlerfall erfindungsgemäß vorgesehen, dass zur Datenübertragung zwischen dem ersten Netzelement und sowohl dem ersten als auch dem zweiten übergeordneten Netzknoten der Datentransport zumindest teilweise parallel (d.h. zumindest teilweise über dieselbe Wegstrecke der optischen Übertragungsstrecke, d.h. nicht disjunkt) - im Fehlerfall über den zweiten Teilbereich der optischen Übertragungsstrecke - geführt wird.

Somit erfolgt die Anbindung eines Aggregationsknotens (R1-Router) an die beiden R2-Backbone-Standorte (bzw. R2-Router) (des A-Netzes bzw. des B-Netzes) erfindungsgemäß immer zumindest teilweise über parallele Verbindungen.

Hierdurch ist es erfindungsgemäß vorteilhaft möglich, dass eine (zumindest teilweise) Parallelführung des Datentransports (über den zweiten Signalpfad bzw. den weiteren zweiten Signalpfad) auch für den Fehlerfall der optischen Übertragungsstrecke vorgesehen ist.

Erfindungsgemäß ist es bevorzugt vorgesehen, dass der erste übergeordnete Netzknoten ein erstes optisches Netzknotenelement aufweist und der zweite übergeordnete Netzknoten ein zweites optisches Netzknotenelement aufweist, dass das erste Netzelement ein drittes optisches Netzknotenelement aufweist und das zweite Netzelement ein viertes optisches Netzknotenelement aufweist, wobei das erste, zweite, dritte und vierte optische Netzknotenelement jeweils eine flexible Datenübertragungskapazität bezüglich des Empfangs von Daten über die optische Übertragungsstrecke als auch bezüglich des Aussendens von Daten über die optische Übertragungsstrecke aufweist, wobei eine Datenübertragung mittels der optischen Übertragungsstrecke
-- zwischen dem ersten optischen Netzknotenelement und dem dritten optischen Netzknotenelement, oder
-- zwischen dem zweiten optischen Netzknotenelement und dem dritten optischen Netzknotenelement
mittels des ersten und/oder weiteren ersten Signalpfads mit einer höheren ersten nominalen Datenübertragungsbandbreite möglich ist, während eine solche Datenübertragung mittels des zweiten und/oder weiteren zweiten Signalpfades lediglich mit einer niedrigeren zweiten nominalen Datenübertragungsbandbreite möglich ist.

Hierdurch ist es erfindungsgemäß in vorteilhafter Weise möglich, dass im Normalfall eine mögliche höhere verwendete Bandbreite aufgrund einerseits einer flexiblen Datenübertragungskapazität von Netzknotenelementen der optischen Übertragungsstrecke und andererseits aufgrund der Streckenlänge zwischen den verschiedenen betrachteten Punkten bzw. Knoten der optischen Übertragungsstrecke auch tatsächlich zu einer erhöhten nutzbaren Übertragungskapazität der optischen Übertragungsstrecke führt. Entsprechend gilt auch, dass eine Datenübertragung mittels der optischen Übertragungsstrecke
-- zwischen dem ersten optischen Netzknotenelement und dem vierten optischen Netzknotenelement, oder
-- zwischen dem zweiten optischen Netzknotenelement und dem vierten optischen Netzknotenelement
mittels eines Teils des zweiten und/oder weiteren zweiten Signalpfads mit einer höheren Datenübertragungsbandbreite möglich ist, während eine solche Datenübertragung unter Nutzung des ersten und/oder weiteren ersten Signalpfades lediglich mit einer niedrigeren Datenübertragungsbandbreite möglich ist (weil die Wegstrecke unter Nutzung eines Teils des zweiten bzw. weiteren zweiten Signalpfades kürzer zum vierten optischen Netzknotenelement kürzer ist als unter Nutzung des ersten bzw. weiteren ersten Signalpfades.

Erfindungsgemäß weist jedes optische Netzknotenelement wenigstens einen optischen Transponder sowie einen Multiplexer auf. Im Kontext der vorliegenden Erfindung bezeichnet ein Netzknotenelement, welches eine flexible Datenübertragungskapazität bezüglich des Empfangs von Daten über die optische Übertragungsstrecke bzw. bezüglich des Aussendens von Daten über die optische Übertragungsstrecke aufweist, ein solches optisches Netzknotenelement, welches insbesondere einen hinsichtlich seiner Datenübertragungsrate (im Sendemodus bzw. im Empfangsmodus) bzw. seines verwendeten Modulationsverfahrens flexiblen Transponder aufweist.

Ferner ist es erfindungsgemäß bevorzugt vorgesehen, dass das Umschalten der Verwendung des Datentransports innerhalb eines Zeitintervalls nach Eintreten des Fehlerfalls erfolgt, wobei das Zeitintervall kleiner als bis maximal gleich 100 Millisekunden, bevorzugt kleiner als bis maximal gleich 50 Millisekunden, besonders bevorzugt kleiner als bis maximal gleich 30 Millisekunden, ganz besonders bevorzugt kleiner als bis maximal 10 Millisekunden, ist.

Hierdurch ist es erfindungsgemäß in vorteilhafter Weise möglich, dass die Heilung eines Fehlerzustand der optischen Übertragungsstrecke auf der optischen Schicht erfolgen kann, so dass ein solcher Fehlerfall nicht zwingend Auswirkungen auf die Internet Protokoll-Schicht haben muss.

Erfindungsgemäß ist es ferner bevorzugt vorgesehen, dass im Normalbetriebsmodus des optischen Telekommunikationsnetzes - und in einem Fehlerfallbetriebsmodus des optischen Telekommunikationsnetzes, in welchem die optische Übertragungsstrecke in ihrem ersten Teilbereich - des Überlappbereichs zwischen dem ersten Signalpfad und dem weiteren ersten Signalpfad - unterbrochen ist -
-- zur Datenübertragung zwischen dem zweiten Netzelement einerseits und
-- sowohl dem ersten übergeordneten Netzknoten als auch dem zweiten übergeordneten Netzknoten andererseits der Datentransport auf einem Teilbereich des zweiten und/oder des weiteren zweiten Signalpfads der optischen Übertragungsstrecke verwendet wird.

Hierdurch ist es erfindungsgemäß in vorteilhafter Weise möglich, dass auch für das zweite Netzelement der jeweils kürzere Weg zum ersten bzw. zweiten übergeordneten Netzknoten für die Datenübertragung gewählt werden kann, so dass auch im Fall des zweiten Netzelements aufgrund der Möglichkeit einer in Abhängigkeit der Weglänge entlang der optischen Übertragungsstrecke zwischen Quellknoten und Zielknoten flexiblen bzw. variablen Datenübertragungsbandbreite ein möglichst hoher Datendurchsatz realisierbar ist - in diesem Fall jedoch auf einem Teilbereich des zweiten Signalpfads bzw. des weiteren zweiten Signalpfades - sowohl für den Normalfall (d.h. bei keiner Unterbrechung des ersten Teilbereichs (des ersten und weiteren ersten Signalpfads)) also auch für den Fehlerfall in Gestalt einer solchen Unterbrechung des ersten Teilbereichs.

Es ist klar, dass erfindungsgemäß in symmetrischer Weise (wie oben für einen Fehlerfall ("erster Art") im ersten Teilbereich) eine Führung des optischen Datenverkehrs auf der optischen Übertragungsstrecke für eine Unterbrechung (Fehlerfall "zweiter Art") in einem Teil des zweiten Teilbereichs (d.h. eines Teils des Überlappbereichs des zweiten Signalpfads und des weiteren zweiten Signalpfads, nämlich im Bereich zwischen dem zweiten Netzelement einerseits und sowohl dem ersten als auch dem zweiten übergeordneten Netzknoten andererseits) vorgesehen ist: Ist die kürzeste Verbindung zwischen dem zweiten Netzelement einerseits und sowohl dem ersten als auch dem zweiten übergeordneten Netzknoten unterbrochen, wird der für das zweite Netzelement vorgesehene Datenverkehr (d.h. sowohl die zum zweiten Netzelement zu sendenden Daten als auch die vom zweiten Netzelement gesendeten Daten) über "die andere Seite" der ringförmig geschlossenen optischen Übertragungsstrecke geführt (dann jedoch gegebenenfalls aufgrund der größeren Streckenlänge mit einer geringeren Datenübertragungsbandbreite), d.h. über zumindest den ersten Teilbereich (im Sinne des Überlappbereichs des ersten und weiteren ersten Signalpfades) - und dies zusätzlich zum Verkehr für das erste Netzelement.

Erfindungsgemäß ist es ferner bevorzugt vorgesehen, dass im Normalbetriebsmodus die erste nominale Datenübertragungsbandbreite über den ersten und/oder weiteren ersten Signalpfad lediglich bis zu einer vorgegebenen Obergrenze genutzt wird, wobei die vorgegebene Obergrenze größer als oder gleich 60%, bevorzugt größer als oder gleich 70%, besonders bevorzugt größer als oder gleich 80%, ganz besonders bevorzugt größer als oder gleich 90% der ersten nominalen Datenübertragungsbandbreite über den ersten und/oder weiteren ersten Signalpfad ist.

Hierdurch ist es erfindungsgemäß in vorteilhafter Weise möglich, dass der Betrieb der optischen Übertragungsstrecke in besonders stabiler und ausfallsicherer Weise gestaltet werden kann, weil auch kurzzeitig vorkommende erhöhte Anforderungen an die Übertragungsbandbreite aus Sicht des Client-Layers der IP-Router abgedeckt werden können. Typisch ist beispielsweise ein Betrieb eines Telekommunikationsnetzes mit einer optischen Übertragungsstrecke derart, dass im Normalfall die nominal zur Verfügung stehende Datenübertragungsbandbreite lediglich zu 80% ausgenutzt wird, d.h. eine Ausnutzung der nominal (d.h. technisch) zur Verfügung stehenden Übertragungsbandbreite wird durch Betriebsführungsregeln für den Normalfall auf 80% begrenzt, so dass die Möglichkeit besteht, kurzzeitig auftretende Schwankungen der vom Client-Layer benötigten Übertragungsbandbreite nach oben ohne die Herbeiführung von Netzüberlastungen zu bewältigen.

Erfindungsgemäß ist es ferner bevorzugt vorgesehen, dass im Fehlerbetriebsmodus die zweite nominale Datenübertragungsbandbreite über den zweiten und/oder weiteren zweiten Signalpfad vollständig genutzt wird.

Hierdurch ist es erfindungsgemäß in vorteilhafter Weise möglich, dass trotz des Vorliegens des Fehlerfalls ("erster Art", d.h. ein Fehlerfall auf dem ersten Teilbereich) die Datenübertragungsanforderungen des ersten Netzelements (d.h. von und zu dem ersten und/oder zweiten übergeordneten Netzknoten) erfüllt werden können.

Ein weiterer Gegenstand der vorliegenden Erfindung ist ein optisches Telekommunikationsnetz zur effektiveren Datenübertragung im Wellenlängen-Multiplex-Betrieb (WDM, wavelength division multiplex) von verschiedenen optischen Wellenlängen, wobei das optische Telekommunikationsnetz einen ersten übergeordneten Netzknoten, einen zweiten übergeordneten Netzknoten und ferner eine Mehrzahl von Netzelementen aufweist, wobei die Mehrzahl von Netzelementen wenigstens ein erstes Netzelement und ein zweites Netzelement aufweisen, wobei das Telekommunikationsnetz eine optische Übertragungsstrecke aufweist, wobei die optische Übertragungsstrecke
-- den ersten übergeordneten Netzknoten und das erste Netzelement sowie
-- das erste Netzelement und das zweite Netzelement sowie ferner
-- das zweite Netzelement und den zweiten übergeordneten Netzknoten direkt oder indirekt miteinander verbindet, wobei die optische Übertragungsstrecke weiterhin auch den ersten übergeordneten Netzknoten und den zweiten übergeordneten Netzknoten miteinander verbindet, so dass die optische Übertragungsstrecke topologisch ringförmig geschlossen ist, wobei die ringförmig geschlossene optische Übertragungsstrecke das erste Netzelement entweder über einen ersten Signalpfad oder über einen zweiten Signalpfad mit dem ersten übergeordneten Netzknoten zumindest indirekt verbindet und wobei die ringförmig geschlossene optische Übertragungsstrecke das erste Netzelement entweder über einen weiteren ersten Signalpfad oder über einen weiteren zweiten Signalpfad mit dem zweiten übergeordneten Netzknoten zumindest indirekt verbindet, wobei sich der erste Signalpfad und der weitere erste Signalpfad zumindest in einem ersten Teilbereich der optischen Übertragungsstrecke überlappen, wobei sich der zweite Signalpfad und der weitere zweite Signalpfad zumindest in einem zweiten Teilbereich der optischen Übertragungsstrecke überlappen, wobei sowohl der erste und zweite Signalpfad als auch der weitere erste und weitere zweite Signalpfad disjunkt zueinander sind und sich zur der optischen Übertragungsstrecke ergänzen,
wobei das optische Telekommunikationsnetz derart konfiguriert ist, dass in einem Normalbetriebsmodus zur Datenübertragung
-- zwischen dem ersten Netzelement und dem ersten übergeordneten Netzknoten der Datentransport auf dem ersten Signalpfad der optischen Übertragungsstrecke und
-- zwischen dem ersten Netzelement und dem zweiten übergeordneten Netzknoten der Datentransport auf dem weiteren ersten Signalpfad der optischen Übertragungsstrecke verwendet wird (Dual Homing).

Es ist hierdurch erfindungsgemäß - auch mit Bezug auf das optische Telekommunikationsnetz - vorteilhaft möglich, dass die im Normalfall verfügbare Datenübertragungsbandbreite verbessert werden kann, insbesondere gegenüber einem Betrieb des optischen Telekommunikationsnetzes, bei dem eine disjunkte Führung der Signalpfade zwischen einem betrachteten Netzelement einerseits und dem ersten bzw. zweiten übergeordneten Netzknoten andererseits gefordert wird.

Ferner ist es erfindungsgemäß - auch mit Bezug auf das optische Telekommunikationsnetz - bevorzugt vorgesehen, dass das optische Telekommunikationsnetz derart konfiguriert ist, dass in einem Fehlerfallbetriebsmodus, in welchem die optische Übertragungsstrecke in ihrem ersten Teilbereich - des Überlapps zwischen dem ersten Signalpfad und dem weiteren ersten Signalpfad - unterbrochen ist, zur Datenübertragung
-- zwischen dem ersten Netzelement und dem ersten übergeordneten Netzknoten der Datentransport auf dem zweiten Signalpfad der optischen Übertragungsstrecke und
-- zwischen dem ersten Netzelement und dem zweiten übergeordneten Netzknoten der Datentransport auf dem weiteren zweiten Signalpfad der optischen Übertragungsstrecke verwendet wird,
wobei das optische Telekommunikationsnetz ferner derart konfiguriert ist, dass vom Normalbetriebsmodus zum Fehlerfallbetriebsmodus durch ein Umschalten des Datentransports - vom ersten und weiteren ersten Signalpfad zum zweiten und weiteren zweiten Signalpfad - umkonfiguriert wird.

Hierdurch ist es erfindungsgemäß vorteilhaft möglich, dass eine (zumindest teilweise) Parallelführung des Datentransports (über den zweiten Signalpfad bzw. den weiteren zweiten Signalpfad) auch für den Fehlerfall der optischen Übertragungsstrecke vorgesehen ist.

Ferner ist es erfindungsgemäß - auch mit Bezug auf das optische Telekommunikationsnetz - bevorzugt, dass der erste übergeordnete Netzknoten ein erstes optisches Netzknotenelement aufweist und der zweite übergeordnete Netzknoten ein zweites optisches Netzknotenelement aufweist, dass das erste Netzelement ein drittes optisches Netzknotenelement aufweist und das zweite Netzelement ein viertes optisches Netzknotenelement aufweist, wobei das erste, zweite, dritte und vierte optische Netzknotenelement jeweils eine flexible Datenübertragungskapazität bezüglich des Empfangs von Daten über die optische Übertragungsstrecke als auch bezüglich des Aussendens von Daten über die optische Übertragungsstrecke aufweist, wobei das erste, zweite, dritte und vierte Netzknotenelement jeweils als ein optischer Add-Drop-Multiplexer (OADM, optical add drop multiplexer), insbesondere als ein rekonfigurierbarer Add-Drop-Multiplexer (ROADM, reconfigurable optical add drop multiplexer) ausgebildet ist, wobei insbesondere eine Datenübertragung mittels der optischen Übertragungsstrecke
-- zwischen dem ersten optischen Netzknotenelement und dem dritten optischen Netzknotenelement, oder
-- zwischen dem zweiten optischen Netzknotenelement und dem dritten optischen Netzknotenelement
mittels des ersten und/oder weiteren ersten Signalpfads mit einer höheren ersten nominalen Datenübertragungsbandbreite möglich ist, während eine solche Datenübertragung mittels des zweiten und/oder weiteren zweiten Signalpfades lediglich mit einer niedrigeren zweiten nominalen Datenübertragungsbandbreite möglich ist.

Hierdurch ist es erfindungsgemäß vorteilhaft möglich, die jeweils bestmögliche Übertragungsbandbreite für die jeweilige Streckenlänge zwischen dem sendenden Netzelement bzw. Netzknoten und dem empfangenden Netzelement bzw. Netzknoten zu realisieren und für den Client-Layer der IP-Router auch sinnvoll nutzbar zu machen.

Ferner bezieht sich die vorliegende Erfindung auch auf ein Computerprogramm mit Programmcodemitteln, mit deren Hilfe alle Schritte des erfindungsgemäßen Verfahrens durchführbar sind, wenn das Computerprogramm auf einer programmierbaren Einrichtung und/oder einem optischen Netzelement und/oder einem optischen Netzknotenelement ausgeführt wird.

Weiterhin ist Gegenstand der vorliegenden Erfindung ein Computerprogrammprodukt mit einem computerlesbaren Medium und einem auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einer programmierbaren Einrichtung und/oder einem optischen Netzelement und/oder einem optischen Netzknotenelement ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Ansicht eines beispielhaften optischen Telekommunikationsnetzes bzw. einer optischen Übertragungsstrecke mit einem ersten und einem zweiten übergeordneten Netzknoten sowie mit einem ersten Netzelement und einem zweiten Netzelement.
- **Figur 2**: zeigt eine schematische Ansicht eines herkömmlichen optischen Telekommunikationsnetzes mit einem ersten und einem zweiten übergeordneten Netzknoten sowie mit einem ersten Netzelement und einem zweiten Netzelement.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

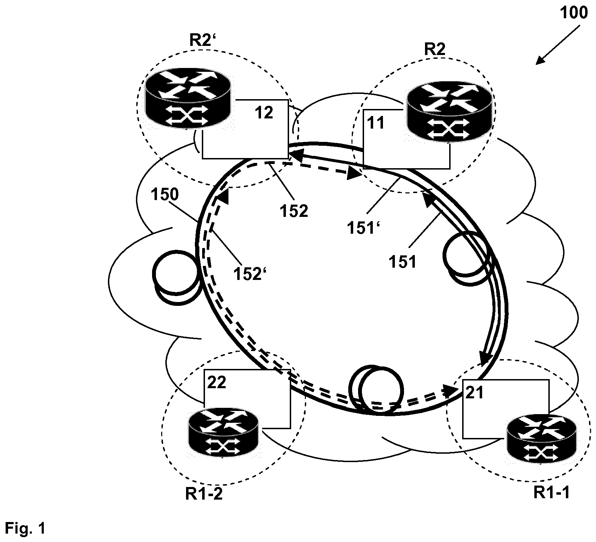

In Figur 1 ist schematisch eine Ansicht eines beispielhaften optischen Telekommunikationsnetzes 100 bzw. einer ringförmig geschlossenen optischen Übertragungsstrecke 150 mit einem ersten übergeordneten Netzknoten R2, einem zweiten übergeordneten Netzknoten R2' sowie mit einem ersten Netzelement R1-1 und einem zweiten Netzelement R1-2 dargestellt.

Erfindungsgemäß weist der erste übergeordnete Netzknoten R2 ein erstes optisches Netzknotenelement 11 aufweist und der zweite übergeordnete Netzknoten R2' weist ein zweites optisches Netzknotenelement 12 auf. Ferner weist das erste Netzelement R1-1 ein drittes optisches Netzknotenelement 21 auf und das zweite Netzelement R1-2 weist ein viertes optisches Netzknotenelement 22 auf. Bevorzugt ist es vorgesehen, dass das erste, zweite, dritte und vierte optische Netzknotenelement 11, 12, 21, 22 jeweils eine flexible Datenübertragungskapazität bezüglich des Empfangs von Daten über die optische Übertragungsstrecke 150 als auch bezüglich des Aussendens von Daten über die optische Übertragungsstrecke 150 aufweist.

Aus dem schematisch dargestellten Beispiel der Anordnung der übergeordneten Netzknoten R2, R2' sowie der Netzelemente R1-1, R1-2 geht hervor, dass die Wegstrecke entlang der optischen Übertragungsstrecke 150 zwischen dem ersten optischen Netzknotenelement 11 (bzw. dem ersten übergeordneten Netzknoten R2) und dem dritten optischen Netzknotenelement 21 (bzw. dem ersten Netzelement R1-1) über einen ersten Signalpfad 151 (d.h. über die in der bildlichen Darstellung gemäß Figur 1 rechte Seite der ringförmig geschlossenen optischen Übertragungsstrecke 150) kürzer ist als über einen zweiten Signalpfad 152 (d.h. über die linke Seite der ringförmig geschlossenen optischen Übertragungsstrecke 150 gemäß Figur 1). In ähnlicher Weise sei angenommen (obwohl dies aus der Figur 1 nicht zwingend deutlich sichtbar hervorgeht), dass die Wegstrecke entlang der optischen Übertragungsstrecke 150 zwischen dem zweiten optischen Netzknotenelement 12 (bzw. dem zweiten übergeordneten Netzknoten R2') und ebenfalls dem dritten optischen Netzknotenelement 21 (bzw. dem ersten Netzelement R1-1) über einen weiteren ersten Signalpfad 151' (d.h. über die in der bildlichen Darstellung gemäß Figur 1 rechte Seite der ringförmig geschlossenen optischen Übertragungsstrecke 150) kürzer ist als über einen weiteren zweiten Signalpfad 152' (d.h. über die linke Seite der ringförmig geschlossenen optischen Übertragungsstrecke 150 gemäß Figur 1).

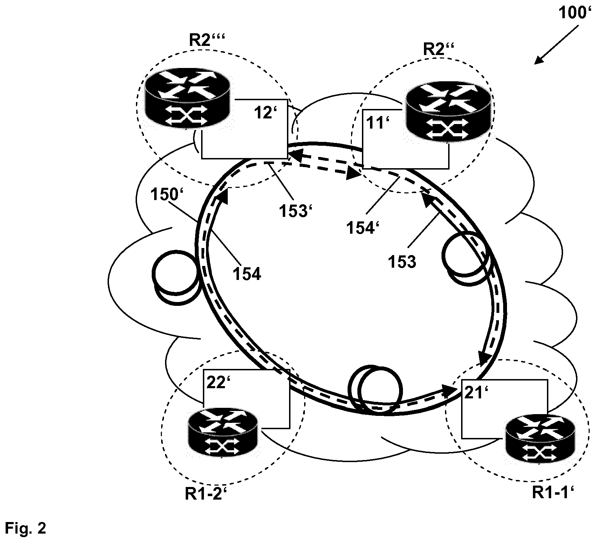

In Figur 2 ist schematisch eine Ansicht eines herkömmlichen optischen Telekommunikationsnetzes 100' bzw. einer ringförmig geschlossenen optischen Übertragungsstrecke 150' mit einem ersten übergeordneten Netzknoten R2", einem zweiten übergeordneten Netzknoten R2'" sowie mit einem ersten Netzelement R1-1' und einem zweiten Netzelement R1-2' dargestellt. Auch bei herkömmlichen optischen Telekommunikationsnetzen 100' weist der erste übergeordnete Netzknoten R2" ein erstes optisches Netzknotenelement 11' aufweist und der zweite übergeordnete Netzknoten R2'" weist ein zweites optisches Netzknotenelement 12' auf. Ferner weist das erste Netzelement R1-1' ein drittes optisches Netzknotenelement 21' auf und das zweite Netzelement R1-2' weist ein viertes optisches Netzknotenelement 22' auf. Bei dem herkömmlichen Telekommunikationsnetz 100' wird mit Blick auf eine möglichst hohe Ausfallsicherheit für den Fall der Verwendung eines gedoppelten Backbone-Netzes (d.h. im Vergleich zu den übergeordneten Netzknoten des betrachteten optischen Telekommunikationsnetzes (bzw. optischen Rings) weiter übergeordnete Netzknoten) üblicherweise gefordert, dass im Nichtfehlerfall, d.h. im Normalfall, beispielsweise das erste Netzelement R1-1 mit dem ersten übergeordneten Netzknoten R2" über den dritten Signalpfad 153 und mit dem zweiten übergeordneten Netzknoten R2'" über den vierten Signalpfad 154 angebunden ist. Falls es dann zu einem Fehler auf der Strecke des dritten Signalpfades 153 kommt, ist die Anbindung (des ersten Netzelements R1-1') an den zweiten übergeordneten Netzknoten R2'" nicht beeinträchtigt. Über einen weiteren dritten Signalpfad 153' kann das erste Netzelement R1-1' in einem solchen Fehlerfall (d.h. der Fehler befindet sich auf dem dritten Signalpfad 153) dennoch an den ersten übergeordneten Netzknoten R2" angebunden werden. In analoger Weise ist ein weiterer vierter Signalpfad 154' für den Fall vorgesehen, wenn auf dem vierten Signalpfad 154 ein Fehler auftritt.

Gemäß der vorliegenden Erfindung ist rein physikalisch aufgrund der kürzeren Wegstrecke über die optische Übertragungsstrecke 150 für eine Datenübertragung zwischen dem ersten optischen Netzknotenelement 11 und dem dritten optischen Netzknotenelement 21 unter Nutzung des ersten Signalpfads 151 bzw. zwischen dem zweiten optischen Netzknotenelement 12 und dem dritten optischen Netzknotenelement 21 unter Nutzung des weiteren ersten Signalpfads 151' eine höhere Datenübertragungsbandbreite (erste nominale Datenübertragungsbandbreite) möglich als bei einer Datenübertragung zwischen diesen Netzknotenelementen unter Nutzung des zweiten bzw. weiteren zweiten Signalpfades 152, 152', auf denen (wegen der größeren Weglänge auf der optischen Übertragungsstrecke 150) lediglich eine niedrigere Datenübertragungsbandbreite möglich ist (zweite nominale Datenübertragungsbandbreite).

Aufgrund der flexiblen Datenübertragungskapazität des ersten, zweiten, dritten und vierten optischen Netzknotenelements 11, 12, 21, 22 bezüglich des Empfangs von Daten über die optische Übertragungsstrecke 150 und bezüglich des Aussendens von Daten über die optische Übertragungsstrecke 150 ist es erfindungsgemäß vorgesehen, diese unterschiedlichen physikalisch möglichen Datenübertragungsbandbreiten auch in vorteilhafter Weise auszunutzen, was eine vollständige Abkehr von der herkömmlichen Betriebsweise eines optischen Telekommunikationsnetzes darstellt, bei welchem aus Gründen der höheren Ausfallsicherheit immer eine disjunkte Streckenführung für den Datentransport zwischen einem betrachteten Netzelement (d.h. entweder das erste Netzelement R1-1 (bzw. das dritte Netzknotenelement 21) oder das zweite Netzelement R1-2 (bzw. das vierte Netzknotenelement 22)) einerseits und entweder dem ersten übergeordneten Netzknoten R2 (bzw. ersten Netzknotenelement 11) oder aber dem zweiten übergeordneten Netzknoten R2' (bzw. zweiten Netzknotenelement 12).

Durch die vorliegende Erfindung wird somit eine Lösung zur Verfügung gestellt, wie Datenraten-adaptive Schnittstellen bzw. Interfaces in einem Internet Protokoll-Aggregationsring vorteilhaft eingesetzt und besonders im Fall einer Leitungsunterbrechung (z.B. Faserbruch) betrieben werden können. Gemäß der vorliegenden Erfindung wird insbesondere die Verwendung eines geschlossenen Aggregationsrings mit der Verwendung von sogenannten Flexrate-Transpondern (als Teil der Netzknotenelemente 11, 12, 21, 22) in vorteilhafter Weise verbunden. Hierbei bezeichnet der Begriff "FlexRate", dass die Kapazität dieser Schnittstellen bzw. Interfaces elektronisch an die Qualität des (optischen) Übertragungswegs angepasst werden kann, insbesondere an die Länge des optischen Übertragungswegs, welche in starkem Maß für dessen Qualität bestimmend ist. Mit der erfindungsgemäßen Lösung lassen sich deutliche Kosteneinsparungen erzielen.

Erfindungsgemäß ist es insbesondere vorgesehen, dass (a) Schnittstellen bzw. Interfaces mit flexibel an die Reichweite angepasster Kapazität so in dem Ring (optische Übertragungsstrecke 150) verwendet werden und dass (b) die Disjunktheit der beiden Working-Pfade aufgegeben wird. Dies führt zunächst zu einer prinzipiellen gleichzeitigen Verwundbarkeit beider Verbindungen (d.h. sowohl der Verbindung des betrachteten Netzelements R1-2/R1-2 zum ersten übergeordneten Netzknoten R2 als auch zum zweiten übergeordneten Netzknoten R2') auf der optischen Ebene bzw. Schicht (dem optischen Layer). Mit dem Einsatz eines optischen Schutzes (bzw. Protektion) können beide Verbindungen jedoch innerhalb von 50 Millisekunden in der Optik (d.h. durch Umschaltung allein auf der optischen Ebene) geheilt werden, weshalb Internet Protokoll-Resilience-Mechanismen nicht zu Einsatz kommen müssen. Dies führt ebenfalls zu einer deutlichen konzeptionellen Vereinfachung gegenüber herkömmlichen Schutzmechanismen, die auf Internet Protokoll Ebene ablaufen.

Tatsächlich ergibt sich aus diesem vermeintlichen Nachteil ein wesentlicher Vorteil der Erfindung: Dadurch dass beide Verbindungen ungefähr die gleiche Streckenlänge (d.h. den ersten Signalpfad 151 bzw. den weiteren ersten Signalpfad 151' für den Fall der Datenübertragung zwischen dem ersten Netzelement R1-1 und dem ersten/zweiten übergeordneten Netzknoten R2/R2') zurücklegen und auch dem gleichen Risiko ausgesetzt sind (welches jedoch optisch hinreichend schnell geheilt werden kann), bieten sie dem Client-Layer immer die gleiche (Datenübertragungs-)Kapazität an. Das Load-Balancing (d.h. das Austarieren der Datenübertragung über verschiedene Netzwerkpfade) kann weiterhin mit identischen IP-Metriken für beide Links betrieben werden. Es muss nach einem optischen Umrouten (d.h. der Umkonfiguration für den Fall eines Ausfalls der optischen Übertragungsstrecke auf dem Überlappbereich des ersten bzw. des weiteren ersten Signalpfades 151, 151') keine Neuberechnung der IP-Metriken durchgeführt werden. Sowohl der lokal mit den kurzfristig umgerouteten Interfacen verbundene Router (beispielsweise der erste übergeordnete Netzknoten R2 oder der zweite übergeordnete Netzknoten R2') als auch ein ferner Router (beispielsweise 'ein ferner Backbone-Router, der zum Netzknoten R1-1 einen Weg sucht) kann die beiden Links mit identischen IP-Metriken weiterhin symmetrisch belasten.

Erfindungsgemäß ist es insbesondere vorgesehen, dass das Ringsegment (der optischen Übertragungsstrecke 150) zwischen beiden R2-Routern (d.h. dem ersten und zweiten übergeordneten Netzknoten R2, R2') als sehr kurz angesehen werden kann, beispielsweise mit realistischen Streckenlängen liegen zwischen 1 km und 20 km, besonders bevorzugt zwischen 4 km und 12km, beispielsweise innerhalb einer Großstadt, so dass die Entfernung bzw. die Streckenlänge zwischen beiden R2-Routern gegenüber der optischen Übertragungsstrecke 150 üblicherweise vernachlässigt werden kann.

Mit den weiterhin geltenden Belastungsregeln, d.h. dass im Normalfall als genutzte Datenübertragungsbandbreite lediglich beispielsweise 80% der nominalen Datenübertragungsbandbreite als vorgegebene Obergrenze verwendet wird bzw. dass im Fehlerfall 100% der jeweils verfügbaren Kapazität verwendet wird, ergeben sich im Normalfall (für das Beispiel einer nominalen Datenübertragungsbandbereite über den ersten bzw. weiteren ersten Signalpfad 151, 151' von 400Gbit/s und einer nominalen Datenübertagungsbandbreite über den zweiten bzw. weiteren zweiten Signalpfad 152, 152' von 300Gbit/s) eine maximal nutzbare Gesamtkapazität von und zu dem ersten Netzelement R1-1 (R1-Router) von 400Gbit/s * 80% * 2 = 640Gbit/s; im Fehlerfall kann eine Datenübertragungsbandbreite von 300Gbit/s * 100% * 2 = 600Gbit/s zugesichert werden. Insgesamt, d.h. im schlechtesten Fall von Normal- und Fehlerfall zusammen betrachtet, kann also ein Verkehrsvolumen von bis zu 600Gbit/s transportiert werden. Dies entspricht einer Verbesserung von 25% gegenüber einem Betriebskonzept, welches eine disjunkte Streckenführung für den Verkehr zwischen dem ersten bzw. zweiten übergeordneten Netzknoten R2/R2' und dem betrachteten ersten Netzelement R1-1 erfordert.

Im Fall eines Fehlers (beispielsweise eines Faserbruchs) werden durch optische Schutzmechanismen (Protection-Mechanismen), etwa in Form schneller Schalter (wie zum Beispiel MEMS-basierte (Mikroelektromechanische System-basierte) Schalter) zusammen mit schneller Adaption innerhalb der datenraten-flexiblen Transponder, die Backup-Lichtpfade innerhalb von weniger als 50ms aktiviert. Eine zusätzliche Reaktion auf der Internet Protokoll-Schicht (dem IP-Layer) ist daher nicht erforderlich. Ferner sind gemäß der vorliegenden Erfindung in vorteilhafter Weise auch keine Protokollerweiterungen für ein Zusammenspiel verschiedener Steuerungsschichten (Control-Plane-Interworking) von optischer Schicht und Internet Protokoll-Schicht (optical Layer und IP-Layer) erforderlich.

Ferner ist es erfindungsgemäß vorteilhaft möglich, dass die bestehenden Internet Protokoll-Metriken im Falle einer Fehlersituation nicht neu berechnet und angepasst werden müssen.

## Patentansprüche

1. Optisches Telekommunikationsnetz (100) zur effektiveren Datenübertragung im Wellenlängen-Multiplex-Betrieb (WDM, wavelength division multiplex) von verschiedenen optischen Wellenlängen, wobei das optische Telekommunikationsnetz (100) einen ersten übergeordneten Netzknoten (R2), einen zweiten übergeordneten Netzknoten (R2') und ferner eine Mehrzahl von Netzelementen (R1-1, R1-2) aufweist, wobei die Mehrzahl von Netzelementen (R1-1, R1-2) wenigstens ein erstes Netzelement (R1-1) und ein zweites Netzelement (R1-2) aufweist, wobei das Telekommunikationsnetz (100) eine optische Übertragungsstrecke (150) aufweist, wobei die optische Übertragungsstrecke (150)
-- den ersten übergeordneten Netzknoten (R2) und das erste Netzelement (R1-1) sowie
-- das erste Netzelement (R1-1) und das zweite Netzelement (R1-2) sowie ferner
-- das zweite Netzelement (R1-2) und den zweiten übergeordneten Netzknoten (R2') direkt oder indirekt
miteinander verbindet, wobei die optische Übertragungsstrecke (150) weiterhin auch den ersten übergeordneten Netzknoten (R2) und den zweiten übergeordneten Netzknoten (R2') miteinander verbindet, so dass die optische Übertragungsstrecke (150) topologisch ringförmig geschlossen ist, wobei die ringförmig geschlossene optische Übertragungsstrecke (150) das erste Netzelement (R1-1) entweder über einen ersten Signalpfad (151) oder über einen zweiten Signalpfad (152) mit dem ersten übergeordneten Netzknoten (R2) zumindest indirekt verbindet und wobei die ringförmig geschlossene optische Übertragungsstrecke (150) das erste Netzelement (R1-1) entweder über einen weiteren ersten Signalpfad (151') oder über einen weiteren zweiten Signalpfad (152') mit dem zweiten übergeordneten Netzknoten (R2') zumindest indirekt verbindet, wobei sich der erste Signalpfad (151) und der weitere erste Signalpfad (151') zumindest in einem ersten Teilbereich der optischen Übertragungsstrecke (150) überlappen, wobei sich der zweite Signalpfad (152) und der weitere zweite Signalpfad (152') zumindest in einem zweiten Teilbereich der optischen Übertragungsstrecke (150) überlappen, wobei sowohl der erste und zweite Signalpfad (151, 152) als auch der weitere erste und weitere zweite Signalpfad (151', 152') disjunkt zueinander sind und sich zu der optischen Übertragungsstrecke (150) ergänzen,
wobei das optische Telekommunikationsnetz (100) derart konfiguriert ist, dass in einem Normalbetriebsmodus zur Datenübertragung
-- zwischen dem ersten Netzelement (R1-1) und dem ersten übergeordneten Netzknoten (R2) der Datentransport auf dem ersten Signalpfad (151) der optischen Übertragungsstrecke (150) und
-- zwischen dem ersten Netzelement (R1-1) und dem zweiten übergeordneten Netzknoten (R2') der Datentransport auf dem weiteren ersten Signalpfad (151') der optischen Übertragungsstrecke (150)
verwendet wird (Dual Homing).

2. Optisches Telekommunikationsnetz (100) nach Anspruch 1, **dadurch gekennzeichnet, dass** das optische Telekommunikationsnetz (100) derart konfiguriert ist, dass in einem Fehlerfallbetriebsmodus, in welchem die optische Übertragungsstrecke (150) in ihrem ersten Teilbereich - des Überlapps zwischen dem ersten Signalpfad (151) und dem weiteren ersten Signalpfad (151') - unterbrochen ist, zur Datenübertragung
-- zwischen dem ersten Netzelement (R1-1) und dem ersten übergeordneten Netzknoten (R2) der Datentransport auf dem zweiten Signalpfad (152) der optischen Übertragungsstrecke (150) und
-- zwischen dem ersten Netzelement (R1-1) und dem zweiten übergeordneten Netzknoten (R2') der Datentransport auf dem weiteren zweiten Signalpfad (152') der optischen Übertragungsstrecke (150)
verwendet wird,
wobei das optische Telekommunikationsnetz (100) ferner derart konfiguriert ist, dass vom Normalbetriebsmodus zum Fehlerfallbetriebsmodus durch ein Umschalten des Datentransports - vom ersten und weiteren ersten Signalpfad (151, 151') zum zweiten und weiteren zweiten Signalpfad (152, 152') - umkonfiguriert wird.

3. Optisches Telekommunikationsnetz (100) nach einem der vorhergehenden Ansprüche, **dadurch gekennzeichnet, dass** der erste übergeordnete Netzknoten (R2) ein erstes optisches Netzknotenelement (11) aufweist und der zweite übergeordnete Netzknoten (R2') ein zweites optisches Netzknotenelement (12) aufweist, dass das erste Netzelement (R1-1) ein drittes optisches Netzknotenelement (21) aufweist und das zweite Netzelement (R1-2) ein viertes optisches Netzknotenelement (22) aufweist, wobei das erste, zweite, dritte und vierte optische Netzknotenelement (11, 12, 21, 22) jeweils eine flexible Datenübertragungskapazität bezüglich des Empfangs von Daten über die optische Übertragungsstrecke (150) als auch bezüglich des Aussendens von Daten über die optische Übertragungsstrecke (150) aufweist, wobei das erste, zweite, dritte und vierte Netzknotenelement (11, 12, 21, 22) jeweils als ein optischer Add-Drop-Multiplexer (OADM, optical add drop multiplexer), insbesondere als ein rekonfigurierbarer Add-Drop-Multiplexer (ROADM, reconfigurable optical add drop multiplexer) ausgebildet ist, wobei insbesondere eine Datenübertragung mittels der optischen Übertragungsstrecke (150)
-- zwischen dem ersten optischen Netzknotenelement (11) und dem dritten optischen Netzknotenelement (21), oder
-- zwischen dem zweiten optischen Netzknotenelement (12) und dem dritten optischen Netzknotenelement (21)
mittels des ersten und/oder weiteren ersten Signalpfads (151, 151') mit einer höheren ersten nominalen Datenübertragungsbandbreite möglich ist, während eine solche Datenübertragung mittels des zweiten und/oder weiteren zweiten Signalpfades (152, 152') lediglich mit einer niedrigeren zweiten nominalen Datenübertragungsbandbreite möglich ist.

4. Verfahren zur effektiveren Datenübertragung in einem optischen Telekommunikationsnetz (100) im Wellenlängen-Multiplex-Betrieb (WDM, wavelength division multiplex) von verschiedenen optischen Wellenlängen, wobei das optische Telekommunikationsnetz (100) einen ersten übergeordneten Netzknoten (R2), einen zweiten übergeordneten Netzknoten (R2') und ferner eine Mehrzahl von Netzelementen (R1-1, R1-2) aufweist, wobei die Mehrzahl von Netzelementen (R1-1, R1-2) wenigstens ein erstes Netzelement (R1-1) und ein zweites Netzelement (R1-2) aufweist, wobei das Telekommunikationsnetz (100) eine optische Übertragungsstrecke (150) aufweist, wobei die optische Übertragungsstrecke (150)
-- den ersten übergeordneten Netzknoten (R2) und das erste Netzelement (R1-1) sowie
-- das erste Netzelement (R1-1) und das zweite Netzelement (R1-2) sowie ferner
-- das zweite Netzelement (R1-2) und den zweiten übergeordneten Netzknoten (R2') direkt oder indirekt
miteinander verbindet, wobei die optische Übertragungsstrecke (150) weiterhin auch den ersten übergeordneten Netzknoten (R2) und den zweiten übergeordneten Netzknoten (R2') miteinander verbindet, so dass die optische Übertragungsstrecke (150) topologisch ringförmig geschlossen ist, wobei die ringförmig geschlossene optische Übertragungsstrecke (150) das erste Netzelement (R1-1) entweder über einen ersten Signalpfad (151) oder über einen zweiten Signalpfad (152) mit dem ersten übergeordneten Netzknoten (R2) zumindest indirekt verbindet und wobei die ringförmig geschlossene optische Übertragungsstrecke (150) das erste Netzelement (R1-1) entweder über einen weiteren ersten Signalpfad (151') oder über einen weiteren zweiten Signalpfad (152') mit dem zweiten übergeordneten Netzknoten (R2') zumindest indirekt verbindet, wobei sich der erste Signalpfad (151) und der weitere erste Signalpfad (151') zumindest in einem ersten Teilbereich der optischen Übertragungsstrecke (150) überlappen, wobei sich der zweite Signalpfad (152) und der weitere zweite Signalpfad (152') zumindest in einem zweiten Teilbereich der optischen Übertragungsstrecke (150) überlappen, wobei sowohl der erste und zweite Signalpfad (151, 152) als auch der weitere erste und weitere zweite Signalpfad (151', 152') disjunkt zueinander sind und sich jeweils paarweise zu der optischen Übertragungsstrecke (150) ergänzen, wobei in einem Normalbetriebsmodus des optischen Telekommunikationsnetzes (100) zur Datenübertragung
-- zwischen dem ersten Netzelement (R1-1) und dem ersten übergeordneten Netzknoten (R2) der Datentransport auf dem ersten Signalpfad (151) der optischen Übertragungsstrecke (150) und
-- zwischen dem ersten Netzelement (R1-1) und dem zweiten übergeordneten Netzknoten (R2') der Datentransport auf dem weiteren ersten Signalpfad (151') der optischen Übertragungsstrecke (150)
verwendet wird (Dual Homing).

5. Verfahren nach Anspruch 4, **dadurch gekennzeichnet, dass** in einem Fehlerfallbetriebsmodus des optischen Telekommunikationsnetzes (100), in welchem die optische Übertragungsstrecke (150) in ihrem ersten Teilbereich - des Überlapps zwischen dem ersten Signalpfad (151) und dem weiteren ersten Signalpfad (151') - unterbrochen ist, zur Datenübertragung
-- zwischen dem ersten Netzelement (R1-1) und dem ersten übergeordneten Netzknoten (R2) der Datentransport auf dem zweiten Signalpfad (152) der optischen Übertragungsstrecke (150) und
-- zwischen dem ersten Netzelement (R1-1) und dem zweiten übergeordneten Netzknoten (R2') der Datentransport auf dem weiteren zweiten Signalpfad (152') der optischen Übertragungsstrecke (150)
verwendet wird,
wobei vom Normalbetriebsmodus zum Fehlerfallbetriebsmodus durch ein Umschalten des Datentransports - vom ersten und weiteren ersten Signalpfad (151, 151') zum zweiten und weiteren zweiten Signalpfad (152, 152') - umkonfiguriert wird.

6. Verfahren nach einem der Ansprüche 4 oder 5, **dadurch gekennzeichnet, dass** der erste übergeordnete Netzknoten (R2) ein erstes optisches Netzknotenelement (11) aufweist und der zweite übergeordnete Netzknoten (R2') ein zweites optisches Netzknotenelement (12) aufweist, dass das erste Netzelement (R1-1) ein drittes optisches Netzknotenelement (21) aufweist und das zweite Netzelement (R1-2) ein viertes optisches Netzknotenelement (22) aufweist, wobei das erste, zweite, dritte und vierte optische Netzknotenelement (11, 12, 21, 22) jeweils eine flexible Datenübertragungskapazität bezüglich des Empfangs von Daten über die optische Übertragungsstrecke (150) als auch bezüglich des Aussendens von Daten über die optische Übertragungsstrecke (150) aufweist, wobei eine Datenübertragung mittels der optischen Übertragungsstrecke (150)
-- zwischen dem ersten optischen Netzknotenelement (11) und dem dritten optischen Netzknotenelement (21), oder
-- zwischen dem zweiten optischen Netzknotenelement (12) und dem dritten optischen Netzknotenelement (21)
mittels des ersten und/oder weiteren ersten Signalpfads (151, 151') mit einer höheren ersten nominalen Datenübertragungsbandbreite möglich ist, während eine solche Datenübertragung mittels des zweiten und/oder weiteren zweiten Signalpfades (152, 152') lediglich mit einer niedrigeren zweiten nominalen Datenübertragungsbandbreite möglich ist.

7. Verfahren nach einem der Ansprüche 4 bis 6, **dadurch gekennzeichnet, dass** das Umschalten der Verwendung des Datentransports innerhalb eines Zeitintervalls nach Eintreten des Fehlerfalls erfolgt, wobei das Zeitintervall kleiner als bis maximal gleich 100 Millisekunden, bevorzugt kleiner als bis maximal gleich 50 Millisekunden, besonders bevorzugt kleiner als bis maximal gleich 30 Millisekunden, ist.

8. Verfahren nach einem der Ansprüche 4 bis 7, **dadurch gekennzeichnet, dass** im Normalbetriebsmodus des optischen Telekommunikationsnetzes (100) - und in einem Fehlerfallbetriebsmodus des optischen Telekommunikationsnetzes (100), in welchem die optische Übertragungsstrecke (150) in ihrem ersten Teilbereich - des Überlapps zwischen dem ersten Signalpfad (151) und dem weiteren ersten Signalpfad (151') - unterbrochen ist -
-- zur Datenübertragung zwischen dem zweiten Netzelement (R1-2) einerseits und
-- sowohl dem ersten übergeordneten Netzknoten (R2) als auch dem zweiten übergeordneten Netzknoten (R2') andererseits der Datentransport auf einem Teilbereich des zweiten und/oder des weiteren zweiten Signalpfads (152, 152') der optischen Übertragungsstrecke (150) verwendet wird.

9. Verfahren nach einem der Ansprüche 4 bis 8, **dadurch gekennzeichnet, dass** im Normalbetriebsmodus die erste nominale Datenübertragungsbandbreite über den ersten und/oder weiteren ersten Signalpfad (151, 151') lediglich bis zu einer vorgegebenen Obergrenze genutzt wird, wobei die vorgegebene Obergrenze größer als oder gleich 60%, bevorzugt größer als oder gleich 70%, besonders bevorzugt größer als oder gleich 80%, ganz besonders bevorzugt größer als oder gleich 90% der ersten nominalen Datenübertragungsbandbreite über den ersten und/oder weiteren ersten Signalpfad (151, 151') ist.

10. Verfahren nach einem der Ansprüche 4 bis 9, **dadurch gekennzeichnet, dass** im Fehlerbetriebsmodus die zweite nominale Datenübertragungsbandbreite über den zweiten und/oder weiteren zweiten Signalpfad (152, 152') vollständig genutzt wird.

11. Computerprogramm mit Programmcodemitteln, mit deren Hilfe alle Schritte eines Verfahrens nach einem der Ansprüche 4 bis 10 durchführbar sind, wenn das Computerprogramm auf mehreren optischen Netzknotenelementen (11, 12, 21, 22) ausgeführt wird.

12. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 4 bis 10 durchführbar sind, wenn das Computerprogramm mehreren optischen Netzknotenelementen (11, 12, 21, 22) ausgeführt wird.

## Claims

1. Optical telecommunications network (100) for more effective data transmission of different optical wavelengths in wavelength-division multiplex (WDM) operation, the optical telecommunications network (100) having a first superordinate network node (R2), a second superordinate network node (R2') and further a plurality of network elements (R1-1, R1-2), the plurality of network elements (R1-1, R1-2) having at least one first network element (R1-1) and one second network element (R1-2), the telecommunications network (100) having an optical transmission route (150), the optical transmission route (150) directly or indirectly interconnecting
- the first superordinate network node (R2) and the first network element (R1-1), as well as
- the first network element (R1-1) and the second network element (R1-2), and also
- the second network element (R1-2) and the second superordinate network node (R2'),
the optical transmission route (150) further also interconnecting the first superordinate network node (R2) and the second superordinate network node (R2') in such a way that the optical transmission route (150) is topologically closed in the form of a ring, the optical transmission route (150) which is closed in the form of a ring at least indirectly connecting the first network element (R1-1) to the first superordinate network node (R2) either via a first signal path (151) or via a second signal path (152), and the optical transmission route (150) which is closed in the form of a ring at least indirectly connecting the first network element (R1-1) to the second superordinate network node (R2') either via a further first signal path (151') or via a further second signal path (152'), the first signal path (151) and the further first signal path (151') overlapping at least in a first sub-region of the optical transmission route (150), the second signal path (152) and the further second signal path (152') overlapping in a second sub-region of the optical transmission route (150), both the first and second signal paths (151, 152) and the further first and further second signal paths (151', 152') being disjoint from one another and complementing one another to form the optical transmission route (150),
the optical telecommunications network (100) being configured in such a way that
- data transport on the first signal path (151) of the optical transmission route (150) is used for data transmission between the first network element (R1-1) and the first superordinate network node (R2), and
- data transport on the further first signal path (151') of the optical transmission route (150) is used for data transmission between the first network element (R1-1) and the second superordinate network node (R2') (dual homing) in a normal operating mode.

2. Optical telecommunications network (100) according to claim 1, **characterised in that** the optical telecommunications network (100) is configured in such a way that in a fault operation mode, in which the optical transmission route (150) is interrupted in the first sub-region thereof - of the overlap between the first signal path (151) and the further first signal path (151') -
- data transport on the second signal path (152) of the optical transmission route (150) is used for data transmission between the first network element (R1-1) and the first superordinate network node (R2), and
- data transport on the further second signal path (152') of the optical transmission route (150) is used for data transmission between the first network element (R1-1) and the first superordinate network node (R2'),
the optical telecommunications network (100) further being configured in such a way that reconfiguration from the normal operating mode to the fault operating mode is performed by switching the data transport from the first and further first signal paths (151, 151') to the second and further second signal paths (152, 152').

3. Optical telecommunications network (100) according to either of the preceding claims, **characterised in that** the first superordinate network node (R2) has a first optical network node element (11) and the second superordinate network node (R2') has a second optical network node element (12), **in that** the first network element (R1-1) has a third optical network node element (21) and the second network element (R1-2) has a fourth optical network node element (22), the first, second, third and fourth optical network node elements (11, 12, 21, 22) each having a flexible data transmission capacity for receiving data via the optical transmission route (150) and for emitting data via the optical transmission route (150), the first, second, third and fourth network node elements (11, 12, 21, 22) each being formed as an optical add-drop multiplexer (OADM), in particular as a reconfigurable optical add-drop multiplexer (ROADM), data transmission in particular being possible via the optical transmission route (150)
- between the first optical network element (11) and the third optical network node element (21) or
- between the second optical network node element (12) and the third optical network node element (21)
at a higher, first nominal data transmission bandwidth using the first and/or further first signal path (151, 151'), whilst data transmission of this type is merely possible at a lower, second nominal data transmission bandwidth using the second and/or further second signal path (152, 152').

4. Method for more effective data transmission of different optical wavelengths in wavelength-division multiplex (WDM) operation, the optical telecommunications network (100) having a first superordinate network node (R2), a second superordinate network node (R2') and further a plurality of network elements (R1-1, R1-2), the plurality of network elements (R1-1, R1-2) having at least one first network element (R1-1) and one second network element (R1-2), the telecommunications network (100) having an optical transmission route (150), the optical transmission route (150) directly or indirectly interconnecting
- the first superordinate network node (R2) and the first network element (R1-1), as well as
- the first network element (R1-1) and the second network element (R1-2), and also
- the second network element (R1-2) and the second superordinate network node (R2'),
the optical transmission route (150) further also interconnecting the first superordinate network node (R2) and the second superordinate network node (R2') in such a way that the optical transmission route (150) is topologically closed in the form of a ring, the optical transmission route (150) which is closed in the form of a ring at least indirectly connecting the first network element (R1-1) to the first superordinate network node (R2) either via a first signal path (151) or via a second signal path (152), and the optical transmission route (150) which is closed in the form of a ring at least indirectly connecting the first network element (R1-1) to the second superordinate network node (R2') either via a further first signal path (151') or via a further second signal path (152'), the first signal path (151) and the further first signal path (151') overlapping at least in a first sub-region of the optical transmission route (150), the second signal path (152) and the further second signal path (152') overlapping in a second sub-region of the optical transmission route (150), both the first and second signal paths (151, 152) and the further first and further second signal paths (151', 152') being disjoint from one another and complementing one another to form the optical transmission route (150),
- data transport on the first signal path (151) of the optical transmission route (150) being used for data transmission between the first network element (R1-1) and the first superordinate network node (R2), and
- data transport on the further first signal path (151') of the optical transmission route (150) being used for data transmission between the first network element (R1-1) and the second superordinate network node (R2') (dual homing) in a normal operating mode of the optical telecommunications network (100).

5. Method according to claim 4, **characterised in that**, in a fault operation mode of the optical telecommunications network (100), in which the optical transmission route (150) is interrupted in the first sub-region thereof - of the overlap between the first signal path (151) and the further first signal path (151') -
- data transport on the second signal path (152) of the optical transmission route (150) is used for data transmission between the first network element (R1-1) and the first superordinate network node (R2), and
- data transport on the further second signal path (152') of the optical transmission route (150) is used for data transmission between the first network element (R1-1) and the first superordinate network node (R2'),
reconfiguration from the normal operating mode to the fault operating mode being performed by switching the data transport from the first and further first signal paths (151, 151') to the second and further second signal paths (152, 152').

6. Method according to either claim 4 or claim 5, **characterised in that** the first superordinate network node (R2) has a first optical network node element (11) and the second superordinate network node (R2') has a second optical network node element (12), **in that** the first network element (R1-1) has a third optical network node element (21) and the second network element (R1-2) has a fourth optical network node element (22), the first, second, third and fourth optical network node elements (11, 12, 21, 22) each having a flexible data transmission capacity for receiving data via the optical transmission route (150) and for emitting data via the optical transmission route (150), data transmission in particular being possible via the optical transmission route (150)
- between the first optical network element (11) and the third optical network node element (21) or
- between the second optical network node element (12) and the third optical network node element (21)
at a higher, first nominal data transmission bandwidth using the first and/or further first signal path (151, 151'), whilst data transmission of this type is merely possible at a lower, second nominal data transmission bandwidth using the second and/or further second signal path (152, 152').

7. Method according to any of claims 4 to 6, **characterised in that** the use of the data transport is switched within a time interval after the fault occurs, the time interval being less than or at most equal to 100 milliseconds, preferably less than or at most equal to 50 milliseconds, particularly preferably less than or at most equal to 30 milliseconds.

8. Method according to any of claims 4 to 7, **characterised in that**, in the normal operating mode of the optical telecommunications network (100), and in a fault operating mode of the optical telecommunications network (100), in which the optical transmission route (150) is interrupted in the first sub-region thereof - of the overlap between the first signal path (151) and the further first signal path (151') -
- the data transport on a sub-region of the second and/or further second signal path (152, 152') of the optical transmission path (150) is used for data transmission between the second network element (R1-2), on the one hand, and
- both the first superordinate network node (R2) and the second superordinate network node (R2'), on the other hand.

9. Method according to any of claims 4 to 8, **characterised in that**, in the normal operating mode, the first nominal data transmission bandwidth via the first and/or further first signal path (151, 151') is merely used up to a predetermined upper bound, the predetermined upper bound being greater than or equal to 60 %, preferably greater than or equal to 70 %, particularly preferably greater than or equal to 80 %, most particularly preferably greater than or equal to 90 % of the first nominal data transmission bandwidth via the first and/or further first signal path (151, 151').

10. Method according to any of claims 4 to 9, **characterised in that**, in the fault operating mode, the second nominal data transmission bandwidth via the second and/or further second signal path (152, 152') is fully used.

11. Computer program comprising program coding means by way of which all of the steps of a method according to any of claims 4 to 10 can be carried out when the computer program is implemented on a plurality of optical network node elements (11, 12, 21, 22).

12. Computer program product comprising a computer-readable medium and a computer program stored on the computer-reading medium and comprising program coding means which are adapted for all of the steps of a method according to any of claims 4 to 10 to be able to be carried out when the computer program is implemented on a plurality of optical network node elements (11, 12, 21, 22).

## Revendications

1. Réseau de télécommunication optique (100) destiné à la transmission de données plus efficace dans le mode en multiplexage de longueurs d'onde (WDM, wavelength division multiplex) de différentes longueurs d'onde optiques, le réseau de télécommunication optique (100) comportant un premier noeud de réseau supérieur (R2), un deuxième noeud de réseau supérieur (R2') et en outre une pluralité d'éléments de réseau (R1-1, R1-2), la pluralité d'éléments de réseau (R1-1, R1-2) comportant au moins un premier élément de réseau (R1-1) et un deuxième élément de réseau (R1-2), le réseau de télécommunication optique (100) comportant un circuit de transmission optique (150), le circuit de transmission optique (150) raccordant les uns aux autres, directement ou indirectement,
- le premier noeud de réseau supérieur (R2) et le premier élément de réseau (R1-1) ainsi que
- le premier élément de réseau (R1-1) et le deuxième élément de réseau (R1-2), de même qu'également
- le deuxième élément de réseau (R1-2) et le deuxième noeud de réseau supérieur (R2'),
le circuit de transmission optique (150) raccordant en outre également entre eux le premier noeud de réseau supérieur (R2) et le deuxième noeud de réseau supérieur (R2') de telle sorte que le circuit de transmission optique (150) est topologiquement fermé en forme d'anneau, le circuit de transmission optique (150) topologiquement fermé en forme d'anneau raccordant au moins indirectement le premier élément de réseau (R1-1) au premier noeud de réseau supérieur (R2) soit par le biais d'un premier chemin de signal (151), soit par le biais d'un deuxième chemin de signal (152), et le circuit de transmission optique (150) topologiquement fermé en forme d'anneau raccordant au moins indirectement le premier élément de réseau (R1-1) au deuxième noeud de réseau supérieur (R2') soit par le biais d'un autre premier chemin de signal (151'), soit par le biais d'un autre deuxième chemin de signal (152'), le premier chemin de signal (151) et l'autre premier chemin de signal (151') se chevauchant au moins dans une première zone partielle du circuit de transmission optique (150), le deuxième chemin de signal (152) et l'autre deuxième chemin de signal (152') se chevauchant au moins dans une deuxième zone partielle du circuit de transmission optique (150), le premier et le deuxième chemin de signal (151, 152) de même que l'autre autre premier et l'autre deuxième chemin de signal (151', 152') étant disjoints les uns des autres et se complétant pour former le circuit de transmission optique (150),
le réseau de télécommunication optique (100) étant configuré de telle sorte que, dans un mode de fonctionnement normal destiné à la transmission de données
- entre le premier élément de réseau (R1-1) et le premier noeud de réseau supérieur (R2), le transport de données est utilisé sur le premier chemin de signal (151) du circuit de transmission optique (150) et
- entre le premier élément de réseau (R1-1) et le deuxième noeud de réseau supérieur (R2'), le transport de données est utilisé sur l'autre premier chemin de signal (151') du circuit de transmission optique (150) (Dual Homing).

2. Réseau de télécommunication optique (100) selon la revendication 1, **caractérisé en ce que** le réseau de télécommunication optique (100) est configuré de telle sorte que, dans un mode de fonctionnement en cas de défaut dans lequel le circuit de transmission optique (150) est interrompu dans sa première zone partielle - du chevauchement entre le premier chemin de signal (151) et l'autre premier chemin de signal (151') - pour la transmission de données
- entre le premier élément de réseau (R1-1) et le deuxième noeud de réseau supérieur (R2'), le transport de données est utilisé sur le deuxième chemin de signal (152) du circuit de transmission optique (150) et
- entre le premier élément de réseau (R1-1) et le deuxième noeud de réseau supérieur (R2'), le transport de données est utilisé sur l'autre deuxième chemin de signal (152') du circuit de transmission optique (150),
le réseau de télécommunication optique (100) étant en outre configuré de telle sorte qu'il y a une reconfiguration à partir du mode de fonctionnement normal vers le mode de fonctionnement en cas de défaut par une commutation du transport de données - à partir du premier et de l'autre premier chemin de signal (151, 151') vers le deuxième et l'autre deuxième chemin de signal (152, 152').

3. Réseau de télécommunication optique (100) selon l'une des revendications précédentes, **caractérisé en ce que** le premier noeud de réseau supérieur (R2) comporte un premier élément de noeud de réseau optique (11), et le deuxième noeud de réseau supérieur (R2') comporte un deuxième élément de noeud de réseau optique (12), **en ce que** le premier élément de réseau (R1-1) comporte un troisième élément de noeud de réseau optique (21), et le deuxième élément de réseau (R1-2) comporte un quatrième élément de noeud de réseau optique (22), le premier, deuxième, troisième et quatrième élément de noeud de réseau optique (11, 12, 21, 22) comportant respectivement une capacité flexible de transmission de données en ce qui concerne la réception de données par le biais du circuit de transmission optique (150) ainsi qu'en ce qui concerne l'émission de données par le biais du circuit de transmission optique (150), le premier, deuxième, troisième et quatrième élément de noeud de réseau optique (11, 12, 21, 22) étant constitués respectivement en tant que multiplexeur insertion-extraction optique (OADM, optical add drop multiplexer), en particulier en tant que multiplexeur insertion-extraction reconfigurable (ROADM, reconfigurable optical add drop multiplexer), en particulier une transmission de données au moyen du circuit de transmission optique (150)
- entre le premier élément de noeud de réseau optique (11) et le troisième élément de noeud de réseau optique (21), ou
- entre le deuxième élément de noeud de réseau optique (12) et le troisième élément de noeud de réseau optique (21)
étant possible au moyen du premier et/ou de l'autre premier chemin de signal (151, 151') avec une première largeur de bande de transmission de données nominale plus élevée, tandis qu'une telle transmission de données au moyen du deuxième et/ou de l'autre deuxième chemin de signal (151') n'est possible qu'avec une deuxième largeur de bande de transmission de données nominale plus faible.

4. Procédé destiné à la transmission de données plus efficace dans le mode en multiplexage de longueurs d'onde (WDM, wavelength division multiplex) de différentes longueurs d'onde optiques, le réseau de télécommunication optique (100) comportant un premier noeud de réseau supérieur (R2), un deuxième noeud de réseau supérieur (R2') et en outre une pluralité d'éléments de réseau (R1-1, R1-2), la pluralité d'éléments de réseau (R1-1, R1-2) comportant au moins un premier élément de réseau (R1-1) et un deuxième élément de réseau (R1-2), le réseau de télécommunication optique (100) comportant un circuit de transmission optique (150), le circuit de transmission optique (150) raccordant les uns aux autres, directement ou indirectement,
- le premier noeud de réseau supérieur (R2) et le premier élément de réseau (R1-1) ainsi que
- le premier élément de réseau (R1-1) et le deuxième élément de réseau (R1-2), de même qu'également
- le deuxième élément de réseau (R1-2) et le deuxième noeud de réseau supérieur (R2'),
le circuit de transmission optique (150) raccordant en outre également entre eux le premier noeud de réseau supérieur (R2) et le deuxième noeud de réseau supérieur (R2') de telle sorte que le circuit de transmission optique (150) est topologiquement fermé en forme d'anneau, le circuit de transmission optique (150) topologiquement fermé en forme d'anneau raccordant au moins indirectement le premier élément de réseau (R1-1) au premier noeud de réseau supérieur (R2) soit par le biais d'un premier chemin de signal (151), soit par le biais d'un deuxième chemin de signal (152), et le circuit de transmission optique (150) topologiquement fermé en forme d'anneau raccordant au moins indirectement le premier élément de réseau (R1-1) au deuxième noeud de réseau supérieur (R2') soit par le biais d'un autre premier chemin de signal (151'), soit par le biais d'un autre deuxième chemin de signal (152'), le premier chemin de signal (151) et l'autre premier chemin de signal (151') se chevauchant au moins dans une première zone partielle du circuit de transmission optique (150), le deuxième chemin de signal (152) et l'autre deuxième chemin de signal (152') se chevauchant au moins dans une deuxième zone partielle du circuit de transmission optique (150), le premier et le deuxième chemin de signal (151, 152) de même que l'autre autre premier et l'autre deuxième chemin de signal (151', 152') étant disjoints les uns des autres et se complétant respectivement par paires pour former le circuit de transmission optique (150),
dans lequel, dans un mode de fonctionnement normal du réseau de télécommunication optique (100), pour la transmission de données
- entre le premier élément de réseau (R1-1) et le premier noeud de réseau supérieur (R2), le transport de données est utilisé sur le premier chemin de signal (151) du circuit de transmission optique (150) et
- entre le premier élément de réseau (R1-1) et le deuxième noeud de réseau supérieur (R2'), le transport de données est utilisé sur l'autre premier chemin de signal (151') du circuit de transmission optique (150) (Dual Homing).

5. Procédé selon la revendication 4, **caractérisé en ce que**, dans un mode de fonctionnement en cas de défaut dans lequel le circuit de transmission optique (150) est interrompu dans sa première zone partielle - du chevauchement entre le premier chemin de signal (151) et l'autre premier chemin de signal (151') - pour la transmission de données
- entre le premier élément de réseau (R1-1) et le premier noeud de réseau supérieur (R2), le transport de données est utilisé sur le deuxième chemin de signal (152) du circuit de transmission optique (150) et
- entre le premier élément de réseau (R1-1) et le premier noeud de réseau supérieur (R2), le transport de données est utilisé sur l'autre deuxième chemin de signal (152') du circuit de transmission optique (150),
dans lequel il y a une reconfiguration à partir du mode de fonctionnement normal vers le mode de fonctionnement en cas de défaut par une commutation du transport de données - à partir du premier et de l'autre premier chemin de signal (151, 151') vers le deuxième et l'autre deuxième chemin de signal (152, 152').

6. Procédé selon l'une des revendications 4 ou 5, **caractérisé en ce que** le premier noeud de réseau supérieur (R2) comporte un premier élément de noeud de réseau optique (11), et le deuxième noeud de réseau supérieur (R2') comporte un deuxième élément de noeud de réseau optique (12), **en ce que** le premier élément de réseau (R1-1) comporte un troisième élément de noeud de réseau optique (21), et le deuxième élément de réseau (R1-2) comporte un quatrième élément de noeud de réseau optique (22), le premier, deuxième, troisième et quatrième élément de noeud de réseau optique (11, 12, 21, 22) comportant respectivement une capacité flexible de transmission de données en ce qui concerne la réception de données par le biais du circuit de transmission optique (150) ainsi qu'en ce qui concerne l'émission de données par le biais du circuit de transmission optique (150), une transmission de données au moyen du circuit de transmission optique (150)
- entre le premier élément de noeud de réseau optique (11) et le troisième élément de noeud de réseau optique (21), ou
- entre le deuxième élément de noeud de réseau optique (12) et le troisième élément de noeud de réseau optique (21)
étant possible au moyen du premier et/ou de l'autre premier chemin de signal (151, 151') avec une première largeur de bande de transmission de données nominale plus élevée, tandis qu'une telle transmission de données au moyen du deuxième et/ou de l'autre deuxième chemin de signal (151') n'est possible qu'avec une deuxième largeur de bande de transmission de données nominale plus faible.

7. Procédé selon l'une des revendications 4 à 6, **caractérisé en ce que** la commutation de l'utilisation du transport de données s'effectue à l'intérieur d'un intervalle de temps après la survenue du cas de défaut, l'intervalle de temps ne dépassant pas au maximum 100 millisecondes, de préférence ne dépassant pas au maximum 50 millisecondes, particulièrement préférablement ne dépassant pas au maximum 30 millisecondes.

8. Procédé selon l'une des revendications 4 à 7, **caractérisé en ce que**, dans le mode de fonctionnement normal du réseau de télécommunication optique (100) - et dans un mode de fonctionnement en cas de défaut du réseau de télécommunication optique (100) dans lequel le circuit de transmission optique (150) est interrompu dans sa première zone partielle - du chevauchement entre le premier chemin de signal (151) et l'autre premier chemin de signal (151'),
- pour la transmission de données entre le deuxième élément de réseau (R1-2) d'un côté et
- aussi bien entre le premier noeud de réseau supérieur (R2) qu'entre le deuxième noeud de réseau supérieur (R2') de l'autre côté, le transport de données est utilisé sur une zone partielle du deuxième et/ou de l'autre autre deuxième chemin de signal (152, 152') du circuit de transmission optique (150).

9. Procédé selon l'une des revendications 4 à 8, **caractérisé en ce que**, dans le mode de fonctionnement normal, la première largeur de bande de transmission de données nominale par le biais du premier et/ou de l'autre premier chemin de signal (151, 151') n'est utilisée que jusqu'à une limite supérieure prédéfinie, la limite supérieure prédéfinie étant supérieure ou égale à 60 %, de préférence supérieure ou égale à 70 %, de façon particulièrement préférée supérieure ou égale à 80 %, de façon tout à fait particulièrement préférée supérieure ou égale à 90 % de la première largeur de bande de transmission de données nominale par le biais du premier et/ou de l'autre premier chemin de signal (151, 151').

10. Procédé selon l'une des revendications 4 à 9, **caractérisé en ce que**, dans le mode de fonctionnement en cas de défaut, la deuxième largeur de bande de transmission de données nominale par le biais du deuxième et/ou de l'autre deuxième chemin de signal (152, 152') est utilisée complètement.

11. Programme informatique avec des moyens de code de programme, à l'aide desquels toutes les étapes d'un procédé selon l'une des revendications 4 à 10 peuvent être réalisées quand le programme informatique est exécuté sur plusieurs éléments de noeud de réseau optiques (11, 12, 21, 22).

12. Produit de programme informatique avec un support lisible par ordinateur et un programme informatique stocké sur le support lisible par ordinateur, avec des moyens de code de programme qui sont appropriés pour que toutes les étapes d'un procédé selon l'une des revendications 4 à 10 puissent être réalisées quand le programme informatique est exécuté sur plusieurs éléments de noeud de réseau optiques (11, 12, 21, 22).
